(19) Europäisches Patentamt
European Patent Office
Office européen des brevets

(11) **EP 4 604 525 A1**

(12) **EUROPEAN PATENT APPLICATION**
published in accordance with Art. 153(4) EPC

(43) Date of publication:
**20.08.2025 Bulletin 2025/34**

(21) Application number: **23877647.0**

(22) Date of filing: **11.10.2023**

(51) International Patent Classification (IPC):
*H04N 19/119* (2014.01)   *H04N 19/70* (2014.01)
*H04N 19/13* (2014.01)   *H04N 19/176* (2014.01)

(52) Cooperative Patent Classification (CPC):
H04N 19/119; H04N 19/13; H04N 19/176;
H04N 19/70

(86) International application number:
**PCT/KR2023/015578**

(87) International publication number:
**WO 2024/080720 (18.04.2024 Gazette 2024/16)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **11.10.2022 KR 20220129313**

(71) Applicant: **LG Electronics Inc.**
**Yeongdeungpo-gu**
**Seoul 07336 (KR)**

(72) Inventors:
• **KIM, Chulkeun**
  **Seoul 06772 (KR)**
• **LIM, Jaehyun**
  **Seoul 06772 (KR)**
• **GWAK, Donggyu**
  **Seoul 06772 (KR)**

(74) Representative: **Maikowski & Ninnemann**
**Patentanwälte Partnerschaft mbB**
**Postfach 15 09 20**
**10671 Berlin (DE)**

(54) **IMAGE ENCODING/DECODING METHOD AND APPARATUS USING IMAGE SEGMENTATION, AND RECORDING MEDIUM ON WHICH BITSTREAM IS STORED**

(57)    The present disclosure relates to an image encoding/decoding method using image split and a medium that stores a bitstream. An image encoding method according to an embodiment of the present disclosure may include deriving a size of a processing unit of an image based on available resources and a peak memory of a decoder, deriving a split method of the image based on the derived size of the processing unit, deriving split information of the image based on the split method, and connecting and reconstructing the processing unit of the image based on the derived split information of the image, wherein the split information of the image includes location information of the processing unit.

[FIG. 14]

```
        START
          │
          ▼               S1410
┌──────────────────────────────────┐
│ DETERMINE PROFILE, TIER, AND LEVEL│
└──────────────────────────────────┘
          │               S1420
          ▼
┌──────────────────────────────────┐
│      DERIVE SPLIT INFORMATION     │
└──────────────────────────────────┘
          │
          ▼
         END
```

EP 4 604 525 A1

**Description**

[Technical Field]

The present disclosure relates to an image encoding/decoding method and apparatus using image split and a recording medium storing a bitstream, and more specifically, to an image encoding/decoding technology using image split considering resources.

[Background Art]

With the development of machine learning technology, demand for image processing-based artificial intelligence services is increasing. **In** order to effectively process a vast amount of image data required for artificial intelligence services within limited resources, image compression technology optimized for machine task performance is essential. However, existing image compression technology has been developed with the goal of high-resolution, high-quality image processing for human vision, and has the problem of being unsuitable for artificial intelligence services. Accordingly, research and development on new machine-oriented image compression technology suitable for artificial intelligence services is actively underway.

[Detailed Description of Invention]

[Technical Problem]

The present disclosure is directed to providing an image encoding/decoding method and apparatus with improved encoding/decoding efficiency.

In addition, the present disclosure is directed to providing an image split and split region expression technology that is adaptive to available resources of a device.

In addition, the present disclosure is directed to providing an image split and split region expression technology that is adaptive to a peak memory.

In addition, the present disclosure is directed to providing a neural network-based image encoding/decoding technology.

In addition, the present disclosure is directed to providing a recording medium that stores a bitstream generated by an image encoding method or apparatus according to the present disclosure.

In addition, the present disclosure is directed to providing a recording medium that stores a bitstream received and decoded by an image decoding apparatus according to the present disclosure and used for reconstructing an image.

Technical objects of the present disclosure are not limited to those described above, and other technical objects that have not been described above will be clearly understood by those skilled in the technical field to which the present disclosure pertains based on the following description.

[Technical Solution]

An image decoding method performed by an image decoding apparatus according to an aspect of the present disclosure may include deriving a size of a processing unit of an image based on available resources and a peak memory of a decoder, deriving a split method of the image based on the derived size of the processing unit, deriving split information of the image based on the split method, and connecting and reconstructing the processing unit of the image based on the derived split information of the image, wherein the split information of the image includes location information of the processing unit.

An image encoding method performed by an image encoding apparatus according to an aspect of the present disclosure may include determining a size of a processing unit of an image, determining a split method of the image based on the determined size of the processing unit, and generating split information of the image based on the split method, wherein the split information of the image includes location information of the processing unit.

A bitstream transmitting method according to an aspect of the present disclosure may include transmitting a bitstream generated by an image encoding method, wherein the image encoding method includes determining a size of a processing unit of an image, determining a split method of the image based on the determined size of the processing unit, and generating split information of the image based on the split method, and the split information of the image includes location information of the processing unit.

A recording medium according to another aspect of the present disclosure may store the bitstream generated by the image encoding method or the image encoding apparatus of the present disclosure.

A bitstream transmitting method according to still another aspect of the present disclosure may transmit the bitstream generated by the image encoding method or the image encoding apparatus of the present disclosure to an image decoding apparatus.

The features of the present disclosure briefly summarized above are merely illustrative aspects of the detailed description of the present disclosure and do not limit the scope of the present disclosure.

[Advantageous Effects]

According to the present disclosure, it is possible to provide an image encoding/decoding method and apparatus with improved encoding/decoding efficiency.

In addition, according to the present disclosure, it is possible to provide a neural network-based image encoding/decoding technology.

In addition, according to the present disclosure, it is possible to provide an image encoding/decoding technology that is adaptive to resources of a device.

In addition, according to the present disclosure, it is possible to provide an image encoding/decoding technology considering a peak memory.

In addition, according to the present disclosure, it is possible to increase the usability of a device by enabling encoding/decoding according to available resources of the device.

In addition, according to the present disclosure, it is possible to provide a recording medium that stores a bitstream received and decoded by an image decoding apparatus according to the present disclosure and used for reconstructing an image.

Effects of the present disclosure are not limited to those described above, and other effects that have not been described above will be clearly understood by those skilled in the technical field to which the present disclosure pertains from the following description.

[Description of Drawings]

FIG. 1 is a view schematically showing a VCM system to which embodiments of the present disclosure are applicable.

FIG. 2 is a diagram schematically showing a VCM pipeline structure to which embodiments of the present disclosure are applicable.

FIG. 3 is a diagram schematically showing an image/video encoder to which embodiments of the present disclosure are applicable.

FIG. 4 is a diagram schematically showing an image/video decoder to which embodiments of the present disclosure are applicable.

FIG. 5 is a flowchart schematically illustrating a feature/feature map encoding procedure to which embodiments of the present disclosure are applicable.

FIG. 6 is a flowchart schematically illustrating a feature/feature map decoding procedure to which embodiments of the present disclosure are applicable.

FIG. 7 is a diagram illustrating an example of a feature extraction and reconstruction method to which embodiments of the present disclosure are applicable.

FIG. 8 is a diagram illustrating an example of an image split method to which embodiments of the present disclosure are applicable.

FIGS. 9 and 10 are diagrams illustrating examples of an image encoding/decoding system including a video/image coding for machines (VCM) image encoder and decoder.

FIG. 11 is a diagram illustrating an example of a VCM hierarchical structure.

FIG. 12 is a diagram illustrating an example of a VCM bitstream composed of an encoded abstraction feature and neural network abstraction layer (NNAL) information.

FIG. 13 is a diagram illustrating an example of the operation of an image encoder according to an embodiment of the present disclosure.

FIG. 14 is a diagram illustrating an example of the operation of an image decoder according to an embodiment of the present disclosure.

FIG. 15 is a diagram for describing an example of input data being split according to an embodiment of the present disclosure.

FIG. 16 illustrates an example of an image split method according to an embodiment of the present disclosure.

FIGS. 17 to 19 are diagrams for describing an example of image split information generation and configuration according to an embodiment of the present disclosure.

FIG. 20 is a diagram illustrating an example of bitstream configuration according to an embodiment of the present disclosure.

FIG. 21 is a diagram illustrating an image decoding method according to an embodiment of the present disclosure.

FIG. 22 is a diagram illustrating an image encoding method according to an embodiment of the present disclosure.

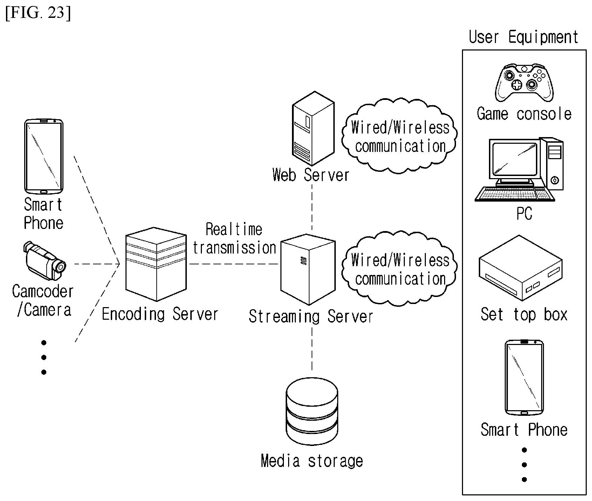

FIG. 23 is a view illustrating an example of a content streaming system to which embodiments of the present disclosure are applicable.

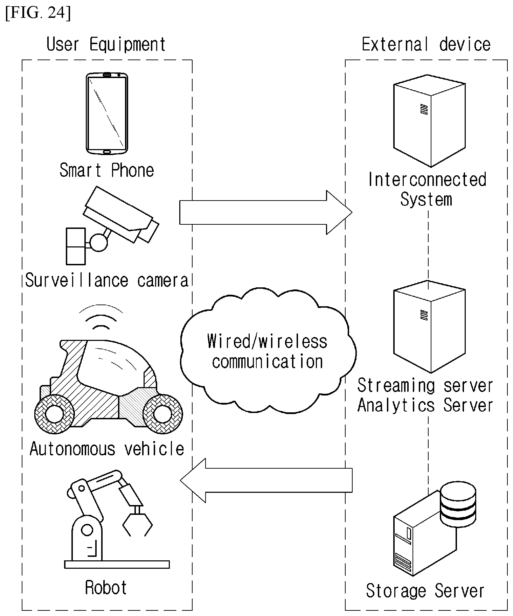

FIG. 24 is a view showing another example of a content streaming system to which embodiments of the present disclosure are applicable.

[Modes of the Invention]

Hereinafter, the embodiments of the present disclosure will be described in detail with reference to the accompanying drawings so as to be easily implemented by those skilled in the art. However, the present disclosure may be implemented in various different forms, and is not limited to the embodiments described herein.

In describing the present disclosure, in case it is determined that the detailed description of a related known function or construction renders the scope of the present disclosure unnecessarily ambiguous, the detailed description thereof will be omitted. In the drawings, parts not related to the description of the present disclosure are omitted, and similar reference numerals are attached to similar parts.

In the present disclosure, when a component is "connected", "coupled" or "linked" to another component, it may include not only a direct connection relationship but also an indirect connection relationship in which an intervening component is present. In addition, when a component "includes" or "has" other components, it means that other components may be further included, rather than excluding other components unless otherwise stated.

In the present disclosure, the terms first, second, etc. may be used only for the purpose of distinguishing one component from other components, and do not limit the order or importance of the components unless otherwise stated. Accordingly, within the scope of the present disclosure, a first component in one embodiment may be referred to as a second component in another embodiment, and similarly, a second component in one embodiment may be referred to as a first component in another embodiment.

In the present disclosure, components that are distinguished from each other are intended to clearly describe each feature, and do not mean that the components are necessarily separated. That is, a plurality of components may be integrated and implemented in one hardware or software unit, or one component may be distributed and implemented in a plurality of hardware or software units. Therefore, even if not stated otherwise, such embodiments in which the components are integrated or the component is distributed are also included in the scope of the present disclosure.

In the present disclosure, the components described in various embodiments do not necessarily mean essential components, and some components may be optional components. Accordingly, an embodiment consisting of a subset of components described in an embodiment is also included in the scope of the present disclosure. In addition, embodiments including other components in addition to components described in the various embodiments are included in the scope of the present disclosure.

The present disclosure relates to encoding and decoding of an image, and terms used in the present disclosure may have a general meaning commonly used in the technical field, to which the present disclosure belongs, unless newly defined in the present disclosure.

The present disclosure may be applied to a method disclosed in a Versatile Video Coding (VVC) standard and/or a Video Coding for Machines (VCM) standard. In addition, the present disclosure may be applied to a method disclosed in an essential video coding (EVC) standard, AOMedia Video 1 (AV1) standard, 2nd generation of audio video coding standard (AVS2), or a next-generation video/image coding standard (e.g., H.267 or H.268, etc.).

This disclosure provides various embodiments related to video/image coding, and, unless otherwise stated, the embodiments may be performed in combination with each other. In the present disclosure, "video" refers to a set of a series of images according to the passage of time. An "image" may be information generated by artificial intelligence (AI). Input information used in the process of performing a series of tasks by AI, information generated during the information processing process, and the output information may be used as images. In the present disclosure, a "picture" generally refers to a unit representing one image in a specific time period, and a slice/tile is a coding unit constituting a part of a picture in encoding. One picture may be composed of one or more slices/tiles. In addition, a slice/tile may include one or more coding tree units (CTUs). The CTU may be partitioned into one or more CUs. A tile is a rectangular region present in a specific tile row and a specific tile column in a picture, and may be composed of a plurality of CTUs. A tile column may be defined as a rectangular region of CTUs, may have the same height as a picture, and may have a width specified by a syntax element signaled from a bitstream part such as a picture parameter set. A tile row may be defined as a rectangular region of CTUs, may have the same width as a picture, and may have a height specified by a syntax element signaled from a bitstream part such as a picture parameter set. A tile scan is a certain continuous ordering method of CTUs partitioning a picture. Here, CTUs may be sequentially ordered according to a CTU raster scan within a tile, and tiles in a picture may be sequentially ordered according to a raster scan order of tiles of the picture. A slice may contain an integer number of complete tiles, or may contain a continuous integer number of complete CTU rows within one tile of one picture. A slice may be exclusively included in a single NAL unit. One picture may be composed of one or more tile groups. One tile group may include one or more tiles. A brick may indicate a rectangular region of CTU rows within a tile in a picture. One tile may include one or more bricks. The brick may refer to a rectangular region of CTU rows in a tile. One tile may be split into a plurality of bricks, and each brick may include one or more CTU rows belonging to a tile. A tile which is not split into a plurality of bricks may also be treated as a brick.

In the present disclosure, a "pixel" or a "pel" may mean a smallest unit constituting one picture (or image). In addition, "sample" may be used as a term corresponding to a pixel. A sample may generally represent a pixel or a value of a pixel, and may represent only a pixel/pixel value of a luma component or only a pixel/pixel value of a chroma component.

In an embodiment, especially when applied to VCM, when there is a picture composed of a set of components having different characteristics and meanings, a pixel/pixel value may represent a pixel/pixel value of a component generated through independent information or combination, synthesis, and analysis of each component. For example, in RGB input, only the pixel/pixel value of R may be represented, only the pixel/pixel value of G may be represented, or only the pixel/pixel value of B may be represented. For example, only the pixel/pixel value of a luma component synthesized using the R, G, and B components may be represented. For example, only the pixel/pixel values of images and information extracted through analysis of R, G, and B components from components may be represented.

In the present disclosure, a "unit" may represent a basic unit of image processing. The unit may include at least one of a specific region of the picture and information related to the region. One unit may include one luma block and two chroma (e.g., Cb and Cr) blocks. The unit may be used interchangeably with terms such as "sample array", "block" or "area" in some cases. In a general case, an M×N block may include samples (or sample arrays) or a set (or array) of transform coefficients of M columns and N rows. In an embodiment, In particular, especially when applied to VCM, the unit may represent a basic unit containing information for performing a specific task.

In the present disclosure, "current block" may mean one of "current coding block", "current coding unit", "coding target block", "decoding target block" or "processing target block". When prediction is performed, "current block" may mean "current prediction block" or "prediction target block". When transform (inverse transform)/quantization (dequantization) is performed, "current block" may mean "current transform block" or "transform target block". When filtering is performed, "current block" may mean "filtering target block".

In addition, in the present disclosure, a "current block" may mean "a luma block of a current block" unless explicitly stated as a chroma block. The "chroma block of the current block" may be expressed by including an explicit description of a chroma block, such as "chroma block" or "current chroma block".

In the present disclosure, the term "/" and "," should be interpreted to indicate "and/or." For instance, the expression "A/B" and "A, B" may mean "A and/or B." Further, "A/B/C" and "A/B/C" may mean "at least one of A, B, and/or C."

In the present disclosure, the term "or" should be interpreted to indicate "and/or." For instance, the expression "A or B" may comprise 1) only "A", 2) only "B", and/or 3) both "A and B". In other words, in the present disclosure, the term "or" should be interpreted to indicate "additionally or alternatively."

The present disclosure relates to video/image coding for machines (VCM).

VCM refers to a compression technology that encodes/decodes part of a source image/video or information obtained from the source image/video for the purpose of machine vision. In VCM, the encoding/decoding target may be referred to as a feature. The feature may refer to information extracted from the source image/video based on task purpose, requirements, surrounding environment, etc. The feature may have a different information form from the source image/video, and accordingly, the compression method and expression format of the feature may also be different from those of the video source.

VCM may be applied to a variety of application fields. For example, in a surveillance system that recognizes and tracks objects or people, VCM may be used to store or transmit object recognition information. In addition, in intelligent transportation or smart traffic systems, VCM may be used to transmit vehicle location information collected from GPS, sensing information collected from LIDAR, radar, etc., and various vehicle control information to other vehicles or infrastructure. Additionally, in the smart city field, VCM may be used to perform individual tasks of interconnected sensor nodes or devices.

The present disclosure provides various embodiments of feature/feature map coding. Unless otherwise specified, embodiments of the present disclosure may be implemented individually, or may be implemented in combination of two or more.

Overview of VCM System

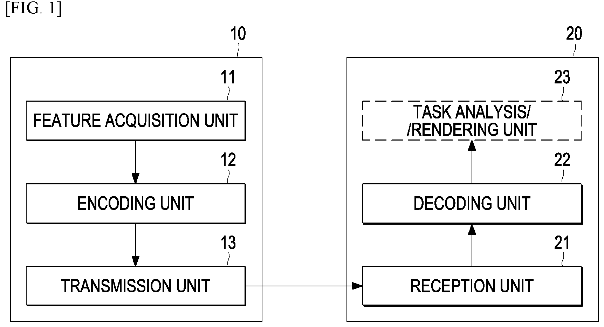

FIG. 1 is a diagram schematically showing a VCM system to which embodiments of the present disclosure are applicable.

Referring to FIG. 1, the VCM system may include an encoding apparatus 10 and a decoding apparatus 20.

The encoding apparatus 10 may compress/encode a feature/feature map extracted from a source image/video to generate a bitstream, and transmit the generated bitstream to the decoding apparatus 20 through a storage medium or network. The encoding apparatus 10 may also be referred to as a feature encoding apparatus. In a VCM system, the feature/feature map may be generated at each hidden layer of a neural network. The size and number of channels of the generated feature map may vary depending on the type of neural network or the location of the hidden layer. In the present disclosure, a feature map may be referred to as a feature set, and a feature or feature map may be referred to as "feature information".

The encoding apparatus 10 may include a feature acquisition unit 11, an encoding unit 12, and a transmission unit 13.

The feature acquisition unit 11 may acquire a feature/feature map for the source image/video. Depending on the embodiment, the feature acquisition unit 11 may acquire a feature/feature map from an external device, for example, a feature extraction network. In this case, the feature acquisition unit 11 performs a feature reception interface function. Alternatively, the feature acquisition unit 11 may acquire a feature/feature map by executing a neural network (e.g., CNN, DNN, etc.) using the source image/video as input. In this case, the feature acquisition unit 11 performs a feature extraction network function.

Depending on the embodiment, the encoding device 10 may further comprise a source image generator (not shown) for acquiring source images/videos, or instead of the feature acquisition unit 11. The source image generator may be implemented with an image sensor, a camera module, etc., and may acquire the source image/video through an image/video capture, synthesis, or generation process. In this case, the generated source image/video may be sent to the feature extraction network and used as input data for extracting the feature/feature map.

The encoding unit 12 may encode the feature/feature map acquired by the feature acquisition unit 11. The encoding unit 12 may perform a series of procedures such as prediction, transform, and quantization to increase encoding efficiency. The encoded data (encoded feature/feature map information) may be output in the form of a bitstream. The bitstream containing the encoded feature/feature map information may be referred to as a VCM bitstream.

The transmission unit 13 may acquire feature/feature map information or data output in the form of bitstreams, which may be delivered to the decoding apparatus 20 or other external object via a digital storage medium or network in the form of files or streams. Here, digital storage media may include various storage media such as USB, SD, CD, DVD, Blu-ray, HDD, and SSD. The transmission unit 13 may include elements for generating a media file with a predetermined file format or elements for transmitting data through a broadcasting/communication network. The transmission unit 13 may comprise a transmission device separate from the encoding unit 12, in which case the transmission device may comprise at least one processor for acquiring feature/feature map information or data output in the form of a bitstream and a transmission part for delivering the feature/feature map information or data in the form of a file or stream.

The decoding apparatus 20 may acquire feature/feature map information from the encoding apparatus 10 and reconstruct the feature/feature map based on the acquired information.

The decoding apparatus 20 may include a reception unit 21 and a decoding unit 22.

The reception unit 21 may receive a bitstream from the encoding apparatus 10, acquire feature/feature map information from the received bitstream, and send it to the decoding unit 22.

The decoding unit 22 may decode the feature/feature map based on the acquired feature/feature map information. The decoding unit 22 may perform a series of procedures such as dequantization, inverse transform, and prediction corresponding to the operation of the encoding unit 12 to increase decoding efficiency.

Depending on the embodiment, the decoding apparatus 20 may further include a task analysis/rendering unit 23.

The task analysis/rendering unit 23 may perform task analysis based on the decoded feature/feature map. Additionally, the task analysis/rendering unit 23 may render the decoded feature/feature map into a form suitable for task performance. Various machine (oriented) tasks may be performed based on task analysis results and the rendered features/feature map.

As described above, the VCM system may encode/decode the feature extracted from the source image/video according to user and/or machine requests, task purpose, and surrounding environment, and performs various machine (oriented) tasks based on the decoded feature. The VCM system may be implemented by expanding/redesigning the video/image coding system and may perform various encoding/decoding methods defined in the VCM standard.

VCM pipeline

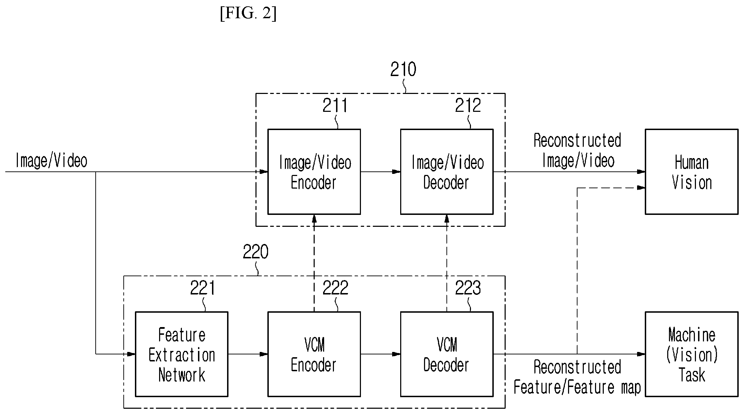

FIG. 2 is a diagram schematically showing a VCM pipeline structure to which embodiments of the present disclosure are applicable.

Referring to FIG. 2, the VCM pipeline 200 may include a first pipeline 210 for encoding/decoding an image/video and a second pipeline 220 for encoding/decoding a feature/feature map. In the present disclosure, the first pipeline 210 may be referred to as a video codec pipeline, and the second pipeline 220 may be referred to as a feature codec pipeline.

The first pipeline 210 may include a first stage 211 for encoding an input image/video and a second stage 212 for decoding the encoded image/video to generate a reconstructed image/video. The reconstructed image/video may be used for human viewing, that is, human vision.

The second pipeline 220 may include a third stage 221 for extracting a feature/feature map from the input image/video, a fourth stage 222 for encoding the extracted feature/feature map, and a fifth stage 223 for decoding the encoded feature/feature map to generate a reconstructed feature/feature map. The reconstructed feature/feature map may be used for a machine (vision) task. Here, the machine (vision) task may refer to a task in which images/videos are consumed by a machine. The machine (vision) task may be applied to service scenarios such as, for example, Surveillance, Intelligent Transportation, Smart City, Intelligent Industry, Intelligent Content, etc. Depending on the embodiment, the reconstructed feature/feature map may be used for human vision.

Depending on the embodiment, the feature/feature map encoded in the fourth stage 222 may be transferred to the first stage 221 and used to encode the image/video. In this case, an additional bitstream may be generated based on the encoded feature/feature map, and the generated additional bitstream may be transferred to the second stage 222 and used to decode the image/video.

Depending on the embodiment, the feature/feature map decoded in the fifth stage 223 may be transferred to the second stage 222 and used to decode the image/video.

FIG. 2 shows a case where the VCM pipeline 200 includes a first pipeline 210 and a second pipeline 220, but this is merely an example and embodiments of the present disclosure are not limited thereto. For example, the VCM pipeline 200 may include only the second pipeline 220, or the second pipeline 220 may be expanded into multiple feature codec pipelines.

Meanwhile, in the first pipeline 210, the first stage 211 may be performed by an image/video encoder, and the second stage 212 may be performed by an image/video decoder. Additionally, in the second pipeline 220, the third stage 221 may be performed by a VCM encoder (or feature/feature map encoder), and the fourth stage 222 may be performed by a VCM decoder (or feature/feature map encoder). Hereinafter, the encoder/decoder structure will be described in detail.

Encoder

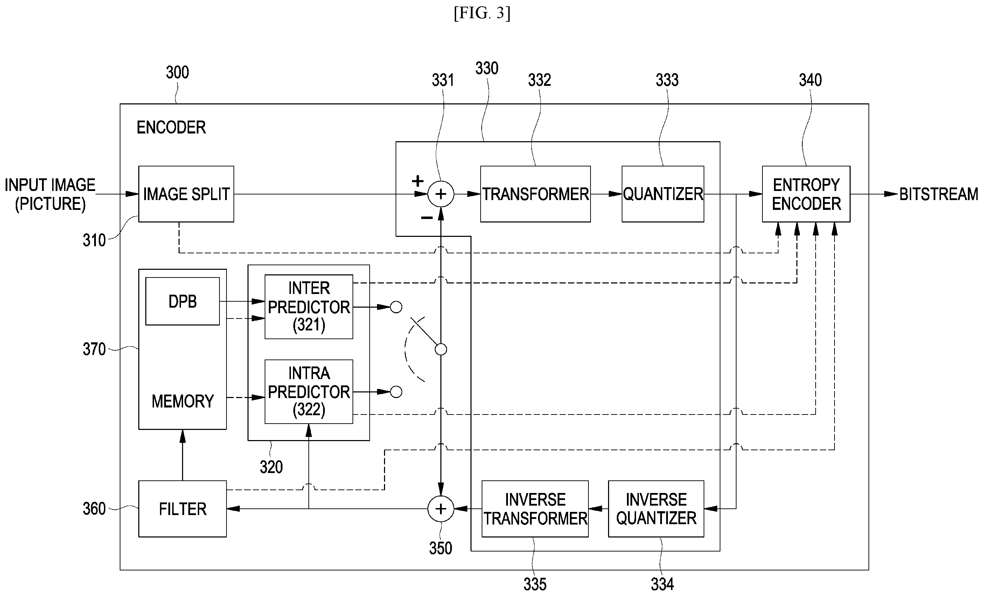

FIG. 3 is a diagram schematically showing an image/video encoder to which embodiments of the present disclosure are applicable.

Referring to FIG. 3, the image/video encoder 300 may further include an image partitioner 310, a predictor 320, a residual processor 330, an entropy encoder 340, and an adder 350, a filter 360, and a memory 370. The predictor 320 may include an inter predictor 321 and an intra predictor 322. The residual processor 330 may include a transformer 332, a quantizer 333, a dequantizer 334, and an inverse transformer 335. The residual processor 330 may further include a subtractor 331. The adder 350 may be referred to as a reconstructor or a reconstructed block generator. The image partitioner 310, the predictor 320, the residual processor 330, the entropy encoder 340, the adder 350, and the filter 360 may be configured by one or more hardware components (e.g., encoder chipset or processor) depending on the embodiment. Additionally, the memory 370 may include a decoded picture buffer (DPB) and may be configured by a digital storage medium. The hardware components described above may further include a memory 370 as an internal/external component.

The image partitioner 310 may partition an input image (or picture, frame) input to the image/video encoder 300 into one or more processing units. As an example, the processing unit may be referred to as a coding unit (CU). The coding unit may be recursively partitioned according to a quad-tree binary-tree ternary-tree (QTBTTT) structure from a coding tree unit (CTU) or largest coding unit (LCU). For example, one coding unit may be partitioned into a plurality of coding units of deeper depth based on a quad tree structure, binary tree structure, and/or ternary structure. In this case, for example, the quad tree structure may be applied first and the binary tree structure and/or ternary structure may be applied later. Alternatively, the binary tree structure may be applied first. The image/video coding procedure according to the present disclosure may be performed based on a final coding unit that is no longer partitioned. In this case, the largest coding unit may be used as the final coding unit based on coding efficiency according to image characteristics, or, if necessary, the coding unit may be recursively partitioned into coding units of deeper depth to use a coding unit with an optimal size as the final coding unit. Here, the coding procedure may include procedures such as prediction, transform, and reconstruction, which will be described later. As another example, the processing unit may further include a prediction unit (PU) or a transform unit (TU). In this case, the prediction unit and the transform unit may each be divided or partitioned from the final coding unit described above. The prediction unit may be a unit of sample prediction, and the transform unit may be a unit for deriving a transform coefficient and/or a unit for deriving a residual signal from the transform coefficient.

In some cases, the unit may be used interchangeably with terms such as block or area. In a general case, an MxN block may represent a set of samples or transform coefficients consisting of M columns and N rows. A sample may generally represent a pixel or a pixel value, and may represent only a pixel/pixel value of a luma component, or only a pixel/pixel value of a chroma component. The sample may be used as a term corresponding to pixel or pel.

The image/video encoder 300 may generate a residual signal (residual block, residual sample array) by subtracting a prediction signal (predicted block, prediction sample array) output from the inter predictor 321 or the intra predictor 322 from the input image signal (original block, original sample array) and transmit the generated residual signal to the transformer 332. In this case, as shown, the unit that subtracts the prediction signal (prediction block, prediction sample array) from the input image signal (original block, original sample array) within the image/video encoder 300 may be referred to as the subtractor 331. The predictor may perform prediction on a processing target block (hereinafter referred to as a current block) and generate a predicted block including prediction samples for the current block. The predictor may determine whether intra prediction or inter prediction is applied in current block or CU units. The predictor may generate various information related to prediction, such as prediction mode information, and transfer it to the entropy encoder 340. Information about prediction may be encoded in the entropy encoder 340 and output in the form of a bitstream.

The intra predictor 322 may predict the current block by referring to the samples in the current picture. At this time, the referenced samples may be located in the neighbor of the current block or may be located away from the current block, depending on the prediction mode. In intra prediction, the prediction modes may include a plurality of non-directional modes and a plurality of directional modes. The non-directional mode may include, for example, a DC mode and a planar mode. The directional mode may include, for example, 33 directional prediction modes or 65 directional prediction modes according to the degree of detail of the prediction direction. However, this is merely an example, more or less directional prediction modes may be used depending on settings. The intra predictor 322 may determine the prediction mode applied to the current block by using a prediction mode applied to a neighboring block.

The inter predictor 321 may derive a predicted block for the current block based on a reference block (reference sample array) specified by a motion vector on a reference picture. In this case, in order to reduce the amount of motion information transmitted in the inter prediction mode, the motion information may be predicted in block, subblock, or sample units based on correlation of motion information between the neighboring block and the current block. The motion information may include a motion vector and a reference picture index. The motion information may further include inter prediction direction (L0 prediction, L1 prediction, Bi prediction, etc.) information. In the case of inter prediction, the neighboring block may include a spatial neighboring block present in the current picture and a temporal neighboring block present in the reference picture. The reference picture including the reference block and the reference picture including the temporal neighboring block may be the same or different. The temporal neighboring block may be called a collocated reference block, a co-located CU (colCU), and the like, and the reference picture including the temporal neighboring block may be called a collocated picture (colPic). For example, the inter predictor 321 may construct a motion information candidate list based on neighboring blocks and generate information indicating which candidate is used to derive a motion vector and/or reference picture index of the current block. Inter prediction may be performed based on various prediction modes, and, for example, in the case of a skip mode and a merge mode, the inter predictor 321 may use motion information of the neighboring block as motion information of the current block. In the case of the skip mode, unlike the merge mode, the residual signal may not be transmitted. In the case of the motion vector prediction (MVP) mode, the motion vector of the neighboring block may be used as a motion vector predictor, and a motion vector difference may be signaled to indicate the motion vector of the current block.

The predictor 320 may generate a prediction signal based on various prediction methods. For example, the predictor may not only apply intra prediction or inter prediction but also simultaneously apply both intra prediction and inter prediction, for prediction of one block. This may be called combined inter and intra prediction (CIIP). In addition, the predictor may be based on an intra block copy (IBC) prediction mode or a palette mode for prediction of the block. The IBC prediction mode or the palette mode may be used for content image/video coding of a game or the like, for example, screen content coding (SCC). IBC basically performs prediction within the current picture, but may be performed similarly to inter prediction in that a reference block is derived within the current picture. That is, IBC may use at least one of the inter prediction techniques described in the present disclosure. The palette mode may be regarded as an example of intra coding or intra prediction. When the palette mode is applied, the sample values within the picture may be signaled based on information about a palette table and a palette index.

The prediction signal generated by the predictor 320 may be used to generate a reconstructed signal or to generate a residual signal. The transformer 332 may generate transform coefficients by applying a transform technique to the residual signal. For example, the transform technique may include at least one of a discrete cosine transform (DCT), a discrete sine transform (DST), a karhunen-loève transform (KLT), a graph-based transform (GBT), or a conditionally non-linear transform (CNT). Here, the GBT refers to transform obtained from a graph when relationship information between pixels is represented by the graph. The CNT refers to transform acquired based on a prediction signal generated using all previously reconstructed pixels. In addition, the transform process may be applied to square pixel blocks having the same size or may be applied to non-square blocks having a variable size.

The quantizer 333 may quantize the transform coefficients and transmit them to the entropy encoder 340. The entropy encoder 340 may encode the quantized signal (information on the quantized transform coefficients) and output a bitstream. The information on the quantized transform coefficients may be referred to as residual information. The quantizer 333 may reorder quantized transform coefficients in a block form into a one-dimensional vector form based on a coefficient scan order and generate information on the quantized transform coefficients based on the quantized transform coefficients in the one-dimensional vector form. The entropy encoder 340 may perform various encoding methods such as, for example, exponential Golomb, context-adaptive variable length coding (CAVLC), context-adaptive binary arithmetic coding (CABAC), and the like. The entropy encoder 340 may encode information necessary for video/image reconstruction other than quantized transform coefficients (e.g., values of syntax elements, etc.) together or separately. Encoded information (e.g., encoded video/image information) may be transmitted or stored in units of network abstraction layers (NALs) in the form of a bitstream. The video/image information may further include information on various parameter sets such as an adaptation parameter set (APS), a picture parameter set (PPS), a sequence parameter set (SPS), or a video parameter set (VPS). In addition, the video/image information may further include general constraint information. In addition, the video/image information may further include a method of generating and using encoded information, a purpose, and the like. In the present disclosure, information and/or syntax elements transferred/signaled from the image/video encoder to the image/video decoder may be included in image/video information. The image/video information may be encoded through the above-described encoding procedure and included in the bitstream. The bitstream may be transmitted over a network or may be stored in a digital storage medium. The network may include a broadcasting network and/or a communication network, and the digital storage medium may include various storage media such as USB, SD, CD, DVD, Blu-ray, HDD, SSD, and the like. A transmitter (not shown) transmitting a signal output from the entropy encoder 340 and/or a storage unit (not shown) storing the signal may be configured as internal/external element of the image/video encoder 300, or the transmitter may be included in the entropy encoder 340.

The quantized transform coefficients output from the quantizer 333 may be used to generate a prediction signal. For example, the residual signal (residual block or residual samples) may be reconstructed by applying dequantization and inverse transform to the quantized transform coefficients through the dequantizer 334 and the inverse transformer 335. The adder 350 adds the reconstructed residual signal to the prediction signal output from the inter predictor 321 or the intra predictor 322 to generate a reconstructed signal (reconstructed picture, reconstructed block, reconstructed sample array). In a case where there is no residual for the processing target block, such as a case where the skip mode is applied, the predicted block may be used as the reconstructed block. The adder 350 may be called a reconstructor or a reconstructed block generator. The generated reconstructed signal may be used for intra prediction of a next processing target block in the current picture and may be used for inter prediction of a next picture through filtering as described below.

Meanwhile, luma mapping with chroma scaling (LMCS) is applicable in a picture encoding and/or reconstruction process.

The filter 360 may improve subjective/objective image quality by applying filtering to the reconstructed signal. For example, the filter 360 may generate a modified reconstructed picture by applying various filtering methods to the reconstructed picture, and store the modified reconstructed picture in the memory 370, specifically, a DPB of the memory 370. The various filtering methods may include, for example, deblocking filtering, a sample adaptive offset, an adaptive loop filter, a bilateral filter, and the like. The filter 360 may generate various information related to filtering and transmit the generated information to the entropy encoder 190. The information related to filtering may be encoded by the entropy encoder 340 and output in the form of a bitstream.

The modified reconstructed picture transmitted to the memory 370 may be used as the reference picture in the inter predictor 321. Through this, prediction mismatch between the encoder and the decoder may be avoided and encoding efficiency may be improved.

The DPB of the memory 370 may store the modified reconstructed picture for use as a reference picture in the inter predictor 321. The memory 370 may store the motion information of the block from which the motion information in the current picture is derived (or encoded) and/or the motion information of the blocks in the already reconstructed picture. The stored motion information may be transferred to the inter predictor 321 for use as the motion information of the spatial neighboring block or the motion information of the temporal neighboring block. The memory 370 may store reconstructed samples of reconstructed blocks in the current picture and may transfer the stored reconstructed samples to the intra predictor 322.

Meanwhile, the VCM encoder (or feature/feature map encoder) basically performs a series of procedures such as prediction, transform, and quantization to encode the feature/feature map and thus may basically have the same/similar structure as the image/video encoder 300 described with reference to FIG. 3. However, the VCM encoder is different from the image/video encoder 300 in that the feature/feature map is an encoding target, and thus may be different from the image/video encoder 300 in the name of each unit (or component) (e.g., image partitioner 310, etc.) and its specific operation content. The specific operation of the VCM encoder will be described in detail later.

Decoder

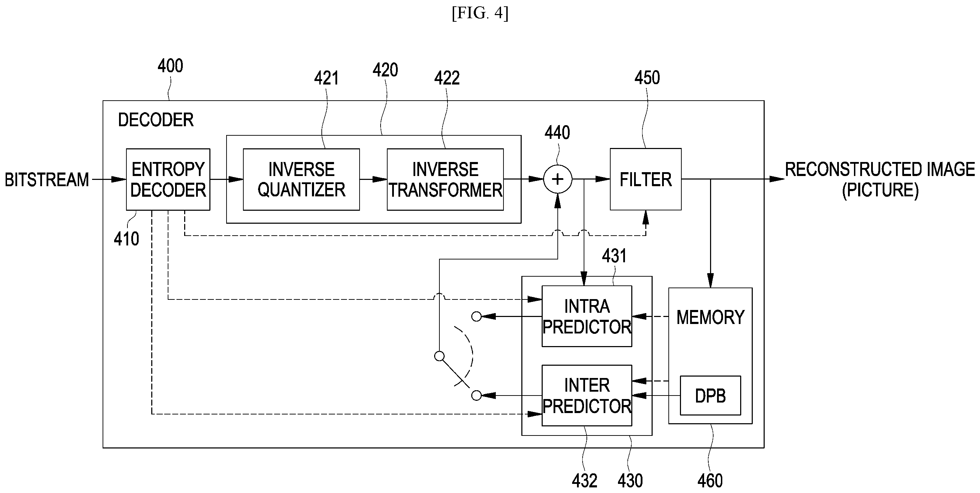

FIG. 4 is a diagram schematically showing an image/video decoder to which embodiments of the present disclosure are applicable.

Referring to FIG. 4, the image/video decoder 400 may include an entropy decoder 410, a residual processor 420, a predictor 430, an adder 440, a filter 450 and a memory 460. The predictor 430 may include an inter predictor 431 and an intra predictor 432. The residual processor 420 may include a dequantizer 421 and an inverse transformer 422. The entropy decoder 410, the residual processor 420, the predictor 430, the adder 440, and the filter 450 may be configured by one hardware component (e.g., a decoder chipset or processor) depending on the embodiment. Additionally, the memory 460 may include a decoded picture buffer (DPB) and may be configured by a digital storage medium. The hardware component may further include the memory 460 as an internal/external component.

When a bitstream containing video/image information is input, the image/video decoder 400 may reconstruct an image/video in correspondence with the process in which the image/video information is processed in the image/video encoder 300 of FIG. 3. For example, the image/video decoder 400 may derive units/blocks based on block partition-related information acquired from the bitstream. The image/video decoder 400 may perform decoding using a processing unit applied in the image/video encoder. Accordingly, the processing unit of decoding may, for example, be a coding unit, and the coding unit may be partitioned from a coding tree unit or a largest coding unit according to a quad tree structure, a binary tree structure and/or a ternary tree structure. One or more transform units may be derived from the coding unit. In addition, the reconstructed image signal decoded and output through the image/video decoder 400 may be played through a playback device.

The image/video decoder 400 may receive a signal output from the encoder of FIG. 3 in the form of a bitstream, and decode the received signal through the entropy decoder 410. For example, the entropy decoder 410 may parse the bitstream to derive information (e.g., image/video information) necessary for image reconstruction (or picture reconstruction). The image/video information may further include information about various parameter sets, such as an adaptation parameter set (APS), picture parameter set (PPS), sequence parameter set (SPS), or video parameter set (VPS). Additionally, image/video information may further include general constraint information. Additionally, the image/video information may include a method of generating and using decoded information, a purpose, and the like. The image/video decoder 400 may decode the picture further based on information about the parameter set and/or general constraint information. The signaled/received information and/or syntax elements may be decoded and acquired from the bitstream through a decoding procedure. For example, the entropy decoder 410 may decode information in the bitstream based on a coding method such as exponential Golomb coding, CAVLC, or CABAC, and output the values of syntax elements necessary for image reconstruction and quantized values of transform coefficients related to residuals. More specifically, in the CABAC entropy decoding method, a bin corresponding to each syntax element may be received in the bitstream, a context model may be determined using decoding target syntax element information and decoding information of neighboring and decoding target blocks or information on the symbol/bin decoded in the previous step, the occurrence probability of the bin may be predicted according to the determined context model, and arithmetic decoding of the bin may be performed to generate a symbol corresponding to the value of each syntax element. At this time, the CABAC entropy decoding method may update the context model using the information on the decoded symbol/bin for the context model of the next symbol/bin after determining the context model. Information about prediction among the information decoded in the entropy decoder 410 is provided to the predictor (inter predictor 432 and intra predictor 431), and a residual value obtained by performing entropy decoding in the entropy decoder 410, that is, quantized transform coefficients and related parameter information may be input to the residual processor 420. The residual processor 420 may derive a residual signal (residual block, residual samples, residual sample array). Additionally, information about filtering among the information decoded by the entropy decoder 410 may be provided to the filter 450. Meanwhile, a receiver (not shown) that receives a signal output from the image/video encoder may be further configured as an internal/external element of the image/video decoder 400, or the receiver may be a component of the entropy decoder 410. Meanwhile, the image/video decoder according to the present disclosure may be called an image/video decoding apparatus, and the image/video decoder may be divided into an information decoder (image/video information decoder) and a sample decoder (image/video sample decoder). In this case, the information decoder may include an entropy decoder 410, and the sample decoder may include at least one of a dequantizer 321, an inverse transformer 322, an adder 440, a filter 450, and a memory 460, an inter predictor 432 or an intra predictor 431.

The dequantizer 421 may dequantize the quantized transform coefficients and output transform coefficients. The dequantizer 421 may rearrange the quantized transform coefficients into a two-dimensional block form. In this case, rearranging may be performed based on the coefficient scan order performed in the image/video encoder. The dequantizer 321 may perform dequantization on quantized transform coefficients using quantization parameters (e.g., quantization step size information) and acquire transform coefficients.

The inverse transformer 422 inversely transforms the transform coefficients to acquire a residual signal (residual block, residual sample array).

The predictor 430 may perform prediction on the current block and generate a predicted block including prediction samples for the current block. The predictor may determine whether intra prediction or inter prediction is applied to the current block based on information about prediction output from the entropy decoder 410, and may determine a specific intra/inter prediction mode.

The predictor 420 may generate a prediction signal based on various prediction methods. For example, the predictor may not only apply intra prediction or inter prediction for prediction of one block, but also may apply intra prediction and inter prediction simultaneously. This may be called combined inter and intra prediction (CIIP). Additionally, the predictor may be based on an intra block copy (IBC) prediction mode or a palette mode for prediction of a block. The IBC prediction mode or palette mode may be used, for example, for image/video coding of content such as games, such as screen content coding (SCC). In IBC, prediction is basically performed within the current picture, but may be performed similarly to inter prediction in that a reference block is derived within the current picture. That is, IBC may use at least one of the inter prediction techniques described in this document. The palette mode may be viewed as an example of intra coding or intra prediction. When the palette mode is applied, information about the palette table and palette index may be included and signaled in the image/video information.

The intra predictor 431 may predict the current block by referencing samples in the current picture. The referenced samples may be located in the neighbor of the current block, or may be located away from the current block, depending on the prediction mode. In intra prediction, prediction modes may include a plurality of non-directional modes and a plurality of directional modes. The intra predictor 431 may determine the prediction mode applied to the current block using the prediction mode applied to the neighboring block.

The inter predictor 432 may derive a predicted block for the current block based on a reference block (reference sample array) specified by a motion vector in the reference picture. At this time, in order to reduce the amount of motion information transmitted in the inter prediction mode, motion information may be predicted in block, subblock, or sample units based on the correlation of motion information between the neighboring block and the current block. The motion information may include a motion vector and a reference picture index. The motion information may further include inter prediction direction (L0 prediction, L1 prediction, Bi prediction, etc.) information. In the case of inter prediction, neighboring blocks may include a spatial neighboring block present in the current picture and a temporal neighboring block present in the reference picture. For example, the inter predictor 432 may construct a motion information candidate list based on neighboring blocks and derive a motion vector and/or reference picture index of the current block based on received candidate selection information. Inter prediction may be performed based on various prediction modes, and information about prediction may include information indicating the mode of inter prediction for the current block.

The adder 440 may generate a reconstructed signal (reconstructed picture, reconstructed block, reconstructed sample array) by adding the acquired residual signal to a prediction signal (predicted block, prediction sample array) output from the predictor (including the inter predictor 432 and/or the intra predictor 431). If there is no residual for a processing target block, such as when skip mode is applied, the predicted block may be used as a reconstruction block.

The adder 440 may be called a reconstructor or a reconstruction block generator. The generated reconstructed signal may be used for intra prediction of a next processing target block in the current picture, may be output after filtering as described later, or may be used for inter prediction of a next picture.

Meanwhile, luma mapping with chroma scaling (LMCS) is applicable in a picture decoding process.

The filter 450 can improve subjective/objective image quality by applying filtering to the reconstructed signal. For example, the filter 450 may generate a modified reconstructed picture by applying various filtering methods to the reconstructed picture, and transmit the modified reconstructed picture in the memory 460, specifically the DPB of the memory 460. Various filtering methods may include, for example, deblocking filtering, sample adaptive offset, adaptive loop filter, bilateral filter, etc.

The (modified) reconstructed picture stored in the DPB of the memory 460 may be used as a reference picture in the inter predictor 432. The memory 460 may store motion information of a block from which motion information in the current picture is derived (or decoded) and/or motion information of blocks in an already reconstructed picture. The stored motion information may be transferred to the inter predictor 432 for use as motion information of spatial neighboring blocks or motion information of temporal neighboring blocks. The memory 460 may store reconstructed samples of reconstructed blocks in the current picture and transfer them to the intra predictor 431.

Meanwhile, the VCM decoder (or feature/feature map decoder) performs a series of procedures such as prediction, inverse transform, and dequantization to decode the feature/feature map, and may basically have the same/similar structure as the image/video decoder 400 described above with reference to FIG. 4. However, the VCM decoder is different from the image/video decoder 400 in that the feature/feature map is a decoding target, and may be different from the image/video decoder 400 in the name (e.g., DPB, etc.) of each unit (or component) and its specific operation. The operation of the VCM decoder may correspond to the operation of the VCM encoder, and the specific operation will be described in detail later.

Feature/feature map encoding procedure

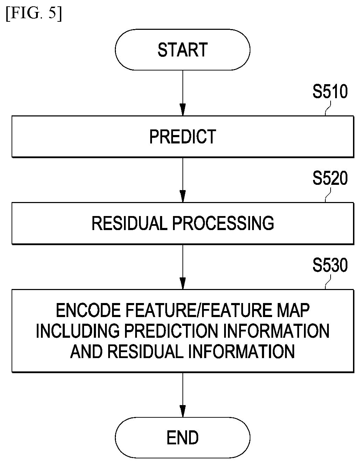

FIG. 5 is a flowchart schematically illustrating a feature/feature map encoding procedure to which embodiments of the present disclosure are applicable.

Referring to FIG. 5, the feature/feature map encoding procedure may include a prediction procedure (S510), a residual processing procedure (S520), and an information encoding procedure (S530).

The prediction procedure (S510) may be performed by the predictor 320 described above with reference to FIG. 3.

Specifically, the intra predictor 322 may predict a current block (that is, a set of current encoding target feature elements) by referencing feature elements in a current feature/feature map. Intra prediction may be performed based on the spatial similarity of feature elements constituting the feature/feature map. For example, feature elements included in the same region of interest (RoI) within an image/video may be estimated to have similar data distribution characteristics. Accordingly, the intra predictor 322 may predict the current block by referencing the already reconstructed feature elements within the region of interest including the current block. At this time, the referenced feature elements may be located adjacent to the current block or may be located away from the current block depending on the prediction mode. Intra prediction modes for feature/feature map encoding may include a plurality of non-directional prediction modes and a plurality of directional prediction modes. The non-directional prediction modes may include, for example, prediction modes corresponding to the DC mode and planar mode of the image/video encoding procedure. Additionally, the directional modes may include prediction modes corresponding to, for example, 33 directional modes or 65 directional modes of an image/video encoding procedure. However, this is an example, and the type and number of intra prediction modes may be set/changed in various ways depending on the embodiment.

The inter predictor 321 may predict the current block based on a reference block (i.e., a set of referenced feature elements) specified by motion information on the reference feature/feature map. Inter prediction may be performed based on the temporal similarity of feature elements constituting the feature/feature map. For example, temporally consecutive features may have similar data distribution characteristics. Accordingly, the inter predictor 321 may predict the current block by referencing the already reconstructed feature elements of features temporally adjacent to the current feature. At this time, motion information for specifying the referenced feature elements may include a motion vector and a reference feature/feature map index. The motion information may further include information about an inter prediction direction (e.g., L0 prediction, L1 prediction, Bi prediction, etc.). In the case of inter prediction, neighboring blocks may include spatial neighboring blocks present within the current feature/feature map and temporal neighboring blocks present within the reference feature/feature map. A reference feature/feature map including a reference block and a reference feature/-feature map including a temporal neighboring block may be the same or different. The temporal neighboring block may be referred to as a collocated reference block, etc., and a reference feature/feature map including a temporal neighboring block may be referred to as a collocated feature/feature map. The inter predictor 321 may construct a motion information candidate list based on neighboring blocks and generate information indicating which candidate is used to derive the motion vector and/or reference feature/feature map index of the current block. Inter prediction may be performed based on various prediction modes. For example, in the case of the skip mode and the merge mode, the inter predictor 321 may use motion information of the neighboring block as motion information of the current block. In the case of the skip mode, unlike the merge mode, the residual signal may not be transmitted. In the case of the motion vector prediction (MVP) mode, the motion vector of the neighboring block is used as a motion vector predictor, and the motion vector of the current block may be indicated by signaling the motion vector difference. The predictor 320 may generate a prediction signal based on various prediction methods in addition to intra prediction and inter prediction described above.

The prediction signal generated by the predictor 320 may be used to generate a residual signal (residual block, residual feature elements) (S520). The residual processing procedure (S520) may be performed by the residual processor 330 described above with reference to FIG. 3. In addition, (quantized) transform coefficients may be generated through a transform and/or quantization procedure for the residual signal, and the entropy encoder 340 may encode information about the (quantized) transform coefficients in the bitstream as residual information (S530). Additionally, the entropy encoder 340 may encode information necessary for feature/feature map reconstruction, such as prediction information (e.g., prediction mode information, motion information, etc.), in the bitstream, in addition to the residual information.

Meanwhile, the feature/feature map encoding procedure may further include not only a procedure (S530) for encoding information for feature/feature map reconstruction (e.g., prediction information, residual information, partitioning information, etc.) and outputting it in the form of a bitstream, a procedure for generating a reconstructed feature/feature map for the current feature/feature map and a procedure (optional) for applying in-loop filtering to the reconstructed feature/feature map.

The VCM encoder may derive (modified) residual feature(s) from the quantized transform coefficient(s) through dequantization and inverse transform, and generate a reconstructed feature/feature map based on the predicted feature(s) and (modified) residual feature(s) that are the output of step S510. The reconstructed feature/feature map generated in this way may be the same as the reconstructed feature/feature map generated in the VCM decoder. When an in-loop filtering procedure is performed on the reconstructed feature/feature map, a modified reconstructed feature/-feature map may be generated through the in-loop filtering procedure on the reconstructed feature/feature map. The modified reconstructed feature/feature map may be stored in a decoded feature buffer (DFB) or memory and used as a reference feature/feature map in the feature/feature map prediction procedure later. Additionally, (in-loop) filtering-related information (parameters) may be encoded and output in the form of a bitstream. Through the in-loop filtering procedure, noise that may occur during feature/feature map coding may be removed, and feature/feature map-based task performance may be improved. In addition, by performing an in-loop filtering procedure at both the encoder stage and the decoder stage, the identity of the prediction result can be guaranteed, the reliability of feature/feature map coding can be improved, and the amount of data transmission for feature/feature map coding can be reduced.

Feature/feature map decoding procedure

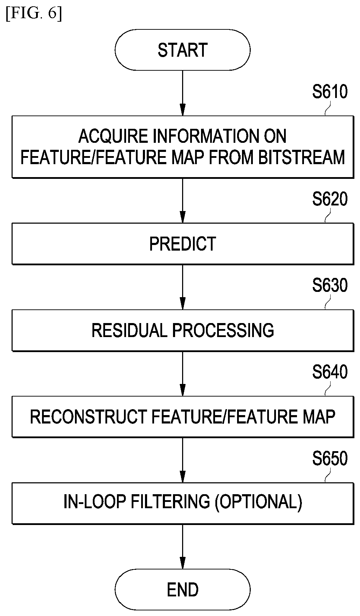

FIG. 6 is a flowchart schematically illustrating a feature/feature map decoding procedure to which embodiments of the present disclosure are applicable.

Referring to FIG. 6, the feature/feature map decoding procedure may include an image/video information acquisition procedure (S610), a feature/feature map reconstruction procedure (S620 to S640), and an in-loop filtering procedure for a reconstructed feature/feature map (S650). The feature/feature map reconstruction procedure may be performed on the prediction signal and residual signal acquired through inter/intra prediction (S620) and residual processing (S630), dequantization and inverse transform process for quantized transform coefficients described in the present disclosure. A modified reconstructed feature/feature map may be generated through an in-loop filtering procedure for the reconstructed feature/feature map, and the modified reconstructed feature/feature map may be output as a decoded feature/feature map. The decoded feature/feature map may be stored in a decoded feature buffer (DFB) or memory and used as a reference feature/feature map in the inter prediction procedure when decoding the feature/feature map. In some cases, the above-described in-loop filtering procedure may be omitted. In this case, the reconstructed feature/feature map may be output without change as a decoded feature/feature map, and stored in the decoded feature buffer (DFB) or memory, and then be used as a reference feature/feature map in the inter prediction procedure when decoding the feature/feature map.

Feature extraction method and data distribution characteristics

Embodiments of the present disclosure propose a prediction process necessary for compressing an activation (feature) map generated in a hidden layer of a deep neural network and a method of generating a related bitstream.

Input data input to a deep neural network is subjected to a computation process of several hidden layers, and the computation result of each hidden layer is output as features/feature maps having various sizes and channel numbers according to the type of deep neural network being used and a location of the hidden layer in the deep neural network.

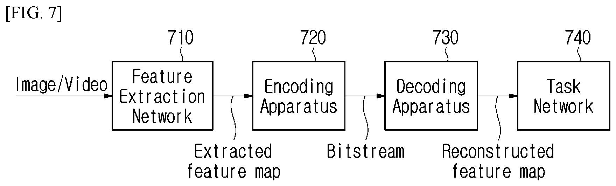

FIG. 7 is a diagram illustrating an example of a feature extraction and reconstruction method to which embodiments of the present disclosure are applicable.

Referring to FIG. 7, a feature extraction network 710 may extract an intermediate layer activation (feature) map of the deep neural network from a source image/video and output the extracted feature map. The feature extraction network 710 may be a set of hidden layers that are continuous from the input of the deep neural network.

An encoding apparatus 720 may compress the output feature map and output the compressed feature map in the form of a bitstream, and a decoding apparatus 730 may reconstruct the (compressed) feature map from the output bitstream. The encoding apparatus 720 may correspond to the encoder 12 of FIG. 1, and the decoding apparatus 720 may correspond to the decoder 22 of FIG. 1. A task network 740 may perform a task based on the reconstructed feature map.

The number of channels of the feature map that is a compression target of the VCM may vary according to a network used for feature extraction and an extraction location and may be more than the number of channels of the input data.

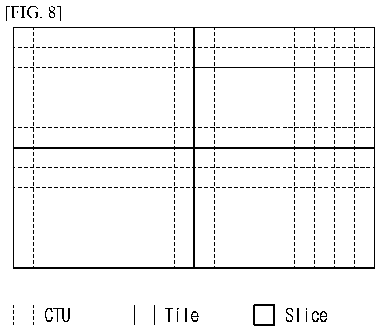

FIG. 8 is a diagram illustrating an example of an image split method to which embodiments of the present disclosure are applicable. As an example, FIG. 8 is a drawing illustrating CTUs, slices, and tiles in an image.

The video/image encoding method according to the present document may be performed based on the following partitioning structure. Procedures such as prediction, residual processing ((inverse) transform, (inverse) quantization, etc.), syntax element coding, filtering, and the like may be performed based on a CTU, a CU (and/or a TU or a PU) derived based on the partitioning structure of FIG. 8. A block partitioning procedure may be performed in the encoding apparatus, and partitioning-related information may be encoded and transmitted to the decoding apparatus in the form of a bitstream. The decoding apparatus may derive a block partitioning structure of a current picture based on the partitioning-related information acquired from the bitstream and perform a series of procedures for image decoding (e.g., prediction, residual processing, block/picture reconstruction, in-loop filtering, etc.) based on the derived block partitioning structure. A size of the CU may be the same as a size of the TU, and a plurality of TUs may exist in a CU region. Meanwhile, the size of the CU may generally represent a size of a luma component (sample) CB. The size of the TU may generally represent a size of a luma component (sample) TB. A size of the chroma component (sample) CB or TB may be derived based on the size of the luma component (sample) CB or TB according to a component ratio according to a color format (a chroma format, for example, 4:4:4, 4:2:2, 4:2:0, etc.) of the picture/video, and a transform/inverse transform may be performed on the basis of a TU (a TB).

In addition, in the coding of the video/image according to the present document, an image processing unit may have a hierarchical structure. One picture may be split into one or more CUs, and the one or more CUs may be grouped and classified as one or more tiles, bricks, slices, and/or tile groups. One slice may include one or more bricks. One brick may include one or more CTU rows in the tile. The slice may include an integer number of bricks of the picture. One tile group may include one or more tiles. One tile may include one or more CTUs. The CTU may be split into one or more CUs. The tile group may include an integer number of tiles according to a tile raster scan in a picture. A slice header may carry information/parameters applicable to a corresponding slice (blocks in a slice). A picture header may carry information/-parameters applicable to a corresponding picture (or a block in a picture). When the encoding/decoding apparatus has a multi-core processor, encoding/decoding procedures for the tile, slice, brick and/or tile group may be processed in parallel. In the present document, the slice or the tile group may be interchangeably used. That is, the tile group header may be referred to as a slice header. Here, the slice may have one of the types of slices including an I slice, a P slice, and a B slice.

In the encoding apparatus, a tile/tile group, a brick, a slice, and sizes of maximum and minimum coding units may be determined according to the characteristics (e.g., resolution) of a video image or in consideration of the efficiency of coding or parallel processing, and information on them or information from which they may be derived may be included in a bitstream.

In the decoding apparatus, information indicating whether a tile/tile group, a brick, a slice, or a CTU in a tile of a current picture has been split into a plurality of coding units may be acquired. It is possible to increase efficiency by acquiring (transmitting) such information only under a specific condition.

The slice header (the slice header syntax) may include information/parameters that may be applied in common to the slice. An APS (an APS syntax) or PPS (a PPS syntax) may include information/parameters that may be applied in common to one or more pictures. The SPS (an SPS syntax) may include information/parameters that may be applied in common to one or more sequences. The VPS (a VPS syntax) may include information/parameters that may be applied in common to multiple layers. A DPS (a DPS syntax) may include information/parameters that may be applied in common to the entire video. The DPS may include information/parameters related to concatenation of a coded video sequence (CVS).

In the present document, an upper level syntax may include at least one of the APS syntax, the PPS syntax, the SPS syntax, the VPS syntax, the DPS syntax, the picture header syntax, and the slice header syntax.

In addition, for example, information on the split, configuration, etc., of the tile/tile group/brick/slice may be configured at an encoding stage through the upper level syntax and transmitted to the decoding apparatus in the form of a bitstream.

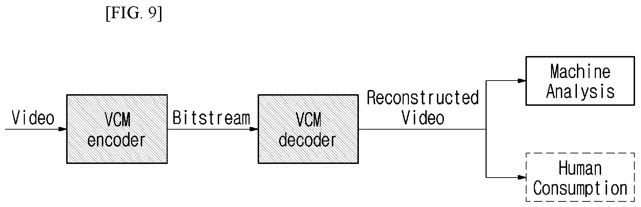

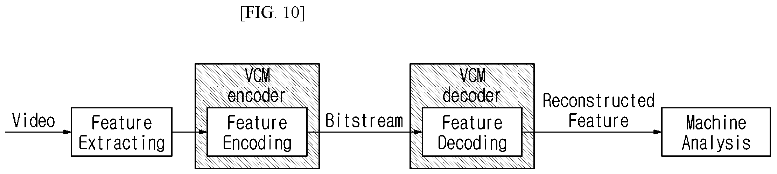

FIG. 9 is a diagram illustrating an example of a VCM image encoding/decoding system, and FIG. 10 is a diagram illustrating another example of the VCM image encoding/decoding system. As an example, in FIGS. 9 and 10, the image encoding system (e.g., FIG. 1) may be extended/redesigned so that only a part of a video source may be used or necessary parts/information may be used by being acquired from the video source according to a request, purpose, and surrounding environment of a user or machine. That is, FIGS. 9 and 10 may be related to VCM.

The VCM may refer to encoding/decoding the entire image and/or a part of the image and/or necessary information (a feature) acquired from the image according to a request, purpose, and surrounding environment of a user and/or machine. In the VCM, an encoding target may be an image itself or may be information referred to as a feature extracted from the image according to a request, purpose, and surrounding environment of a user and/or machine and may be a set of a series of information over time.

Referring to FIG. 9, a VCM system may include an image encoder and an image decoder for VCM. The source device (see FIG. 1) may transmit encoded image information to a reception device via a storage medium or a network. A usage subject of a device may be human and/or machine.

Referring to FIG. 10, a VCM system may include an image encoder and an image decoder for VCM. The source device may transmit encoded image information (a feature) to a reception device via a storage medium or a network. A usage subject of a device may be human and/or machine.

As an example, a process of extracting information, i.e., a feature, from an image may be referred to as feature extraction. The feature extraction may be performed by both a video/image capture device and/or a video/image generation device. The feature may be information extracted/processed from an image according to a request, purpose, or surrounding environment of a user and/or machine and may be a set of a series of information over time.

The image encoder for VCM may perform a series of procedures, such as prediction, transform, quantization, and the like, for the compression and coding efficiency of the entire image and/or a part of the image and/or a feature. The encoded data may be output in the form of a bitstream.

The image decoder for VCM may perform a series of procedures, such as inverse quantization, inverse transform, prediction, and the like, corresponding to the operation of the encoding apparatus, that is, the encoder, to decode a video/image.

The decoded image and/or feature may be rendered. In addition, the decoded image and/or feature may be used to perform a task of a user or machine. Examples of the task may include artificial intelligence (AI), computer vision tasks, and the like, such as face recognition, behavior recognition, lane recognition, and the like.

The present disclosure presents various embodiments regarding acquisition and coding of all and/or a part of an image for VCM, and unless otherwise stated, the embodiments may be performed in combination with each other. The method/embodiment of the present disclosure may be applied to the method disclosed in the VCM standard.

VCM hierarchical structure

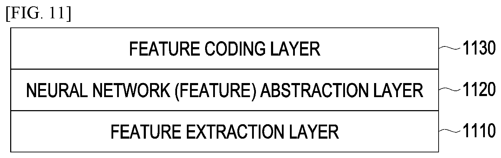

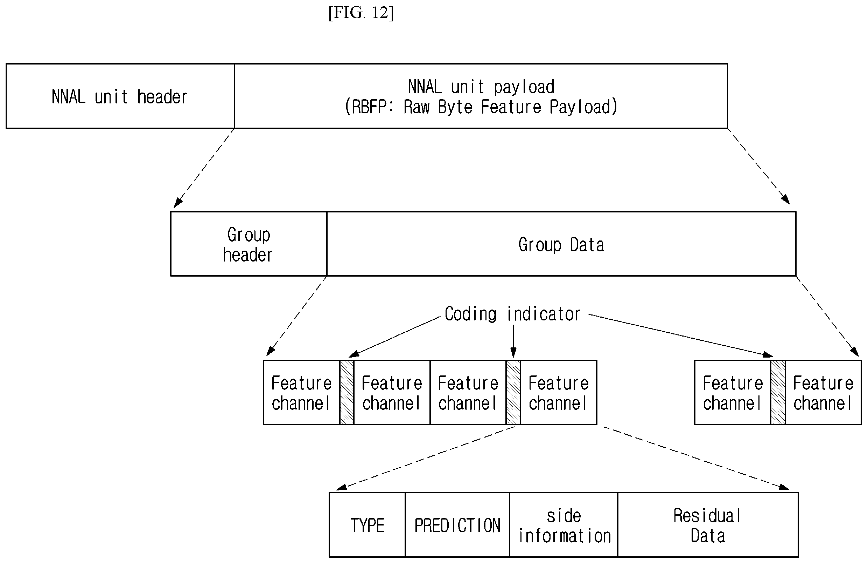

VCM may be based on a hierarchical structure composed of a feature coding layer, a neural network (feature) abstraction layer, and a feature extraction layer. FIG. 11 is a diagram illustrating an example of a VCM hierarchical structure, and FIG. 12 is a diagram illustrating an example of a VCM bitstream composed of an encoded abstraction feature and neural network abstraction layer (NNAL) information.

As an example, referring to FIG. 11, the VCM hierarchical structure may be composed of a feature extraction layer 1110, a neural network (feature) abstraction layer 1120, and a feature coding layer 1130.

The feature extraction layer 1110 may be a layer for extracting a feature from an input source and may also include the result of the extraction. The feature coding layer 1130 may be a layer for compressing the extracted feature and may also include the result of the compression.

The neural network abstraction layer 1120 may abstract information (e.g., information on the extracted feature/feature map) generated in the feature extraction layer 1110 and transfer the abstracted information to the feature coding layer 1130. The neural network abstraction layer 1120 may hide the inside of the feature extraction layer 1110 through abstraction of information and provide a consistent feature interface function. Accordingly, even when a compression target varies due to a change in tools (e.g., a convolutional neural network (CNN), a deep neural network (DNN), etc.), the feature coding layer 1130 may perform a consistent feature coding procedure. In the present disclosure, the neural network abstraction layer (NNAL) may be referred to as a feature abstraction layer.

An interface between the feature extraction layer 1110 and the neural network abstraction layer 1120 and an interface between the feature coding layer 1130 and the neural network abstraction layer 1120 may be defined in advance, and the operation in the neural network abstraction layer 1120 may be set to be changed later.

Referring to FIG. 12, a bitstream configured as illustrated may be referred to as a neural network abstraction layer (NNAL) unit. The NNAL unit may be an independent feature reconstruction unit. Input features for one NNAL unit may be extracted from the same layer in the neural network. Accordingly, the input features for one NNAL unit may be forced to have the same characteristics. For example, the same feature extraction method may be applied to the input features for one NNAL unit.

The NNAL unit may include an NNAL unit header and an NNAL unit payload. The NNAL unit header may include all information necessary to use an encoded feature according to a task. The NNAL unit payload may include abstracted feature information. The NNAL unit payload may include a group header and group data. The group header may include configuration information of feature group data, such as information on a temporal order, number, and common properties of feature channels constituting the feature group. The feature channel may refer to an encoded feature unit. The group data may include a plurality of feature channels and coding demonstrative, and each feature channel may include type information, prediction information, side information, and residual information. In this case, the type information may represent an encoding method, and the prediction information may represent a prediction method. In addition, the side information may include additional information (e.g., entropy coding, quantization-related information, etc.) required for decoding, and the residual information may include information (i.e., a set of feature value information) on encoded feature elements.

Meanwhile, image coding for VCM may be based on a neural network, and in a neural network-based image coding technology, a memory required for a convolution process (e.g., an increase in a size of the feature map of the intermediate layer) may increase more than a size of the input source, that is, the input image. Accordingly, a size of the peak memory of the encoding/decoding process may increase.

This application proposes an image coding technology capable of solving the above problem that can reduce the size of the peak memory by splitting the input source and encoding/decoding the split input source in order to perform encoding/decoding using limited resources.

Accordingly, this application proposes the number of split images and a split method in order to reconstruct a split region to its original form. According to this application, the unit of split, that is, the unit of a processing unit, is not fixed but may vary according to available resources of a device. That is, according to this application, an image coding technology using split of an image that is adaptive to the available resources of the device may be provided. According to an embodiment of this application, when the resources are many, split processing may not be necessary, but when the available resources are few, the number of split regions may need to be increased.

In addition, an embodiment described in the present disclosure may be related to the split processing of the input data of the image partitioner 310 of the encoder of FIG. 3 and the method of expressing the processed input data. The image partitioner 310 may serve to perform the split processing of the input data. According to the embodiment of the present disclosure, the input data of the image partitioner 310 may be split according to resource constraints or service purposes. In addition, information for reconstructing the split input data may be defined in the coding layer and structure of FIGS. 11 and 12, which include a feature coding layer, a neural network (feature) abstraction layer, a feature extraction layer, etc. According to this application, the size of the peak memory can be reduced.

The following Table 1 may show an example of a size of a feature per block of Resnet that is one representative CNN. More specifically, Table 1 is a table for describing an example of the structure, a size of an input/output, and a size of a feature of Resnet that is a CNN. The input image is composed of RGB 3 channels with a width of 244 and a height of 244, and its size, that is, width*height, is assumed to be 150,528.

[Table 1]

| Blocks | op. unit | feat. symbol | feat. size | |
|---|---|---|---|---|
| Input image | | | 224 x 224 x 3 | 150528 |
| Conv. Block 1 | single conv | conv1 | 112 × 112 × 64 | 802816 |
| Conv. Block 2 | max pool | pool2 | 56 × 56 × 64 | 200704 |
| | residual blk | conv2 | 56 × 56 × 256 | 802816 |
| Conv. Block 3 | residual blk | conv3 | 28 × 28 × 512 | 401408 |
| Conv. Block 4 | residual blk | conv4 | 14 × 14 × 1024 | 200704 |
| Conv. Block 5 | residual blk | conv5 | 7 × 7 × 2048 | 100352 |
| FC Block | avg. pool | pool6 | 1 × 1 × 2048 | 2048 |
| | single fc | fc1 | 1000 | 1000 |

According to Table 1, during a CNN process, a size of the output feature of each block may be greater than the input image. For example, convolution block 1 Conv. Block 1 is a single convolution, and its size is 802,816, which is 5.6 times the size of the input image. Generally, as the layer is deeper, a size of the output of the block decreases, and the size of a fully connected (FC) block that is the final result may be smaller than that of the input image. However, the size of the output of the block may increase during an intermediate process, and many resources (e.g., memory) may be required during the processing. According to the embodiments described in the present disclosure, data split processing may be performed to perform neural network-based encoding/decoding using the limited resources (e.g., memory).

According to conventional video codecs, a profile, tier, level (PTL) may be defined for suitable design and application according to its purpose (i.e., a service type) and an application environment (i.e., device performance, an available bandwidth, etc.). The profile may define a used coding tool (e.g., algorithm). In addition, the profile may represent constraints on the used coding tool (e.g., algorithm), and a level may define constraints on the available memory and a size of a buffer, such as the maximum number of applicable pixels, the maximum number of pixels per second, a maximum size of the encoded bitstream per second, and the like. The neural network-based video codec, such as VCM, may also require information that performs a role of the PTL just like the conventional video codecs. Through such information, an amount of resources allowable in the decoding process can be known.

The peak memory during the decoding process may be determined according to a size of the input data. To smoothly process the input data, it is preferable that the size of the peak memory of the decoder determined according to the size of the input data not exceed the maximum amount of resources that may be known through the PTL information. That is, the maximum processing unit value may be defined through the PTL information. When the size of the input data is larger than a size of the maximum processing unit, the input data may be processed only when split into pieces smaller than the size of the maximum processing unit.

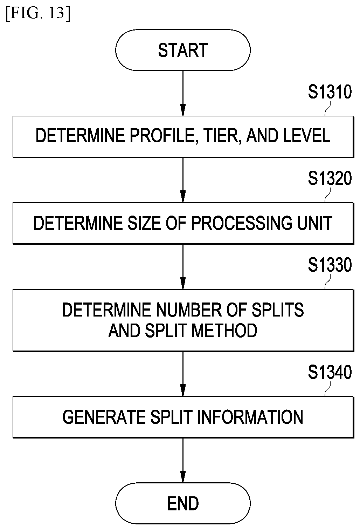

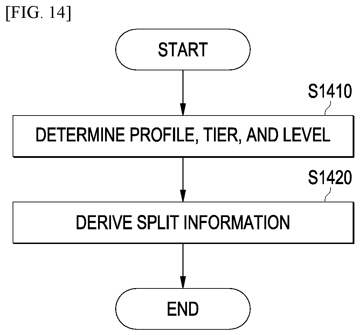

FIGS. 13 and 14 are diagrams illustrating examples of an input data split processing process according to an embodiment of the present disclosure. More specifically, FIG. 13 may illustrate an example of the operation of an encoder according to the present disclosure, and FIG. 14 may illustrate an example of the operation of a decoder according to the present disclosure.

According to the image encoding method according to the example of the present disclosure illustrated in FIG. 13, a PTL may be determined (S1310), a size of a processing unit may be determined (S1320), the number of splits and a split method may be determined (S1330), and split information may be generated (S1340).

According to the image decoding method according to the example of the present disclosure illustrated in FIG. 14, a PTL may be determined (S1410), and split information may be derived (S1420).

Hereinafter, each operation will be described in detail.

First, according to an example of the present disclosure illustrated in FIG. 13, the encoder may determine a PTL (S1310), and during this process, information on resources (resource information, for example, information on a random access memory (RAM), a graphics processing unit (GPU), a central processing unit (CPU), etc.), which is device-specific information, and all PTL information according to services, purposes, and the like may be determined. In addition, during this process, the corresponding information may be determined in consideration of the resources of the decoder.

Thereafter, the size of the processing unit may be determined (S1320). The size of the processing unit may be determined based on the determined profile level information and resource information. Hereinafter, an embodiment of a method of determining a size of a processing unit will be described in detail.

As an example, the size of the processing unit may be based on the size of the maximum processing unit and may be based on the size of the maximum processing unit defined in the PTL. For example, the size of the maximum processing unit may be defined in the PTL. The maximum inputtable resolution and a size of a required memory are determined according to the PTL. In addition, the size of the maximum processing unit may be defined. The following Table 2 may show an example of defining the maximum processing unit (processing unit) in a PTL.

[Table 2]

| Level | Max luma picture size | Max processing unit size | Max processing width size | Max processing height size |
|---|---|---|---|---|
| 1 | 40000 | 5000 | 80 | 62 |
| 2 | 400000 | 500000 | 250 | 200 |
| 3 | 2073600 | 518400 | 480 | 270 |

In Table 2, the types of levels, values of the size of the maximum picture, and values of the size of the maximum processing unit are examples, which may mean that the corresponding information may be defined in the PTL information, that is, the PTL information, and the size of the maximum luma picture may refer to the size of the maximum input data. In this case, the size of the maximum processing unit may be included in the PTL information, and thus may not be encoded as separate information. This is because the size of the maximum processing unit is predefined in the PTL. For example, when the predefined size of the maximum processing unit is stored, the encoder may indicate the size of the maximum processing unit included in the PTL (e.g., level) information as an index, and the decoder may derive the size of the maximum processing unit using the corresponding index. A width and height of the processing unit within the range of the size of the maximum processing unit may be defined along with the size of the maximum processing unit or defined independently of the size of the maximum processing unit. For example, the height may be determined discretely in relation to the width and height of the processing unit or determined within a continuous range, and the width or height of the processing unit may be determined independently as long as it is within the size of the maximum processing unit.

As another example, the size of the maximum processing unit may be determined from required resource information. As an example, the size of the maximum processing unit may be derived from resource information. Meanwhile, for example, when the requirement for the size of the maximum processing unit is not clearly defined, the amount of required resources may be calculated from given information (e.g., a size of the maximum buffer, the maximum resolution, and the maximum frame rate). Once the amount of required resources is derived, the size of the maximum processing unit may be derived based on the derived amount. According to the present embodiment, the size of the maximum processing unit may not be explicitly defined in the PTL, but the size of the maximum processing unit may be derived by applying the predefined information and method. For example, when the minimum memory requirement for driving the encoder/decoder is defined as 8 GB, the size of the maximum processing unit may be derived so that the peak memory of the encoder/decoder does not exceed 8 GB.

According to the above embodiment, since the size of the processing unit is derived in a predefined manner at both the encoder/decoder, the size of the processing unit may not be encoded because the derived size of the processing unit is applied to the encoder/decoder in the same manner, and thus the decoder may derive information on the processing unit without separate signaling.

Meanwhile, according to another example, since the size of the processing unit may be determined according to resources and/or service purposes of the encoder/decoder, in this case, the size or shape of the processing unit may be explicitly signaled. However, as an example, even in this case, the settable range of the processing unit may be restricted. For example, the size of the maximum processing unit may be restricted according to the minimum memory requirement. Alternatively, the size of the processing unit may be defined to be smaller than that of the minimum memory requirement, but may not be larger than that of the minimum memory requirement. Each of the following Tables 3 to 8 shows an example of the definition of the processing unit. First, Table 3 is as follows.

[Table 3]

|  | Descriptor |
| --- | --- |
| processing_unit_info_present_flag | u(1) |
| if(processing_unit_info_present_flag){ |  |
| processing_unit_size | u(8) |
| } |  |

A syntax element processing_unit_info_present_flag (e.g., a first syntax) may be processing unit information presence/absence information indicating the presence of information on the processing unit and may be signaled to the bitstream. As an example, when a value of a first syntax element is a first value (e.g., 1), it may mean that processing unit information (e.g., which may include information on the size of the maximum processing unit) exists, and when the value of the first syntax element is a second value (e.g., 0), it may mean that information on the maximum processing unit does not exist.

A syntax element processing_unit_size (e.g., a second syntax) may indicate the size of the processing unit and may be signaled to the bitstream. As an example, the second syntax may indicate the size of the maximum processing unit. The second syntax may be signaled based on the first syntax and signaled only when the value of the first syntax is a specific value (e.g., 1).

The following Table 4 shows another example of the definition of the processing unit. Table 4 is as follows.

[Table 4]

|  | Descriptor |
| --- | --- |
| processing_unit_info_present_flag | u(1) |
| if(processing_unit_info_present_flag){ |  |
| processing_width | u(4) |
| processing_height | u(4) |
| } |  |

A syntax element processing_unit_info_present_flag (e.g., the first syntax) may be processing unit information presence/absence information (flag), and the overlapping description thereof will be omitted.

The syntax elements processing_width (e.g., a third syntax) and processing_height (e.g., a fourth syntax) may indicate the width and height of the processing unit, respectively. As an example, the third syntax and the fourth syntax may be signaled to the bitstream based on the first syntax. For example, when the first syntax is a specific value (e.g., 1), the third syntax and the fourth syntax may be signaled. Meanwhile, Table 3 is written in such a manner that the third syntax is first signaled and the fourth syntax is signaled, but it is only an embodiment of the present disclosure, and thus the fourth syntax may be signaled before the third syntax, and the third syntax and the fourth syntax may be signaled as one syntax (e.g., processing_width_height), etc., which also corresponds to the embodiment of the present disclosure.

Table 5 below shows still another example of the definition of the processing unit. Table 5 is as follows.

[Table 5]

|  | Descriptor |
| --- | --- |
| processing_unit_size | u(8) |

Unlike Table 3, according to Table 5, the syntax element processing_unit_size (e.g., the second syntax) may be signaled regardless of the first syntax (e.g., processing_unit_info_present_flag). In this case, the first syntax may not be signaled or defined. The overlapping description of the second syntax will be omitted.

The following Table 6 shows yet another example of the definition of the processing unit. Table 6 is as follows.

[Table 6]

|  | Descriptor |
| --- | --- |
| processing_width | u(4) |

(continued)

| | |
|---|---|
| processing_height | u(4) |

The syntax elements processing_width(e.g., the third syntax) and processing_height (e.g., the fourth syntax) may indicate the width and height of the processing unit, respectively, and the overlapping description thereof will be omitted. However, the third syntax and the fourth syntax may be signaled regardless of the first syntax (e.g., processing_unit_info_present_flag). In this case, the first syntax may not be signaled or defined.

Meanwhile, as an example, when information on the number of splits and the split method is derived by the information on the number of splits and the split method, based on the above information, information on the processing unit may be derived, and when the information on the processing unit is derived and a processing unit is specified, based on the specified processing unit, the information on the number of splits and the split method may be derived. That is, when there is no information on the number of splits and/or the split method, that is, only when the value of the information on the number of splits of the processing unit is a specific value (e.g., 0), the information on the processing unit may be signaled. The following Tables 7 and 8 show these embodiments of the present disclosure.

Table 7 below shows yet another example of the definition of the processing unit. Table 7 is as follows.

[Table 7]

| | Descriptor |
|---|---|
| if(!num_processing_unit info_present_flag){ | |
|     processing_unit_info_present_flag | |
|     if(processing_unit_info_present_flag){ | |
|     processing_unit_size | u(8) |
|     } | |
| } | |

A syntax element num_processing_unit_info_present_flag (e.g., a fifth syntax) is information indicating whether the information on the number of splits of the processing unit exists and may be processing unit split number presence information. For example, when a value of the fifth syntax is the first value (e.g., 1), it may mean that the information on the number of splits exists, and when the value of the fifth syntax is the second value (e.g., 0), it may mean that the information on the number of splits does not exist.

The syntax element processing_unit_ info_present_ flag (e.g., the first syntax) may be processing unit information presence/absence information (e.g., a flag). However, the first syntax may be signaled to the bitstream based on the fifth syntax. As an example, when the fifth syntax is a specific value (e.g., 0), the first syntax may be signaled to the bitstream, and when the fifth syntax is another specific value (e.g., 1), the first syntax may not be signaled. The overlapping description of the first syntax will be omitted.

The syntax element processing_unit_size (e.g., the second syntax) may be signaled to the bitstream based on the first syntax (e.g., processing_unit_ info_present_flag). As an example, when the first syntax is a specific value (e.g., 1), the second syntax may be signaled to the bitstream, and when the first syntax is another specific value (e.g., 0), the second syntax may not be signaled.

The following Table 8 shows yet another example of the definition of the processing unit. Table 8 is as follows.

[Table 8]

| | Descriptor |
|---|---|
| if(!num_processing_unit_info_present_flag){ | |
| processing_unit_info_present_flag | u(1) |
| if(processing_unit info_present_flag){ | |
|     processing_width | u(4) |
|     processing_height | u(4) |
| } | |
| } | |

The syntax element num_processing_unit_info_present_flag (e.g., the fifth syntax) may be information indicating whether the information on the number of splits of the processing unit exists, and the overlapping description thereof will be omitted.

The syntax element processing_unit_ info_present_ flag (e.g., the first syntax) may be a processing unit information presence/absence flag, and the overlapping description thereof will be omitted. The first syntax may be signaled based on the fifth syntax.

The syntax elements processing_width(e.g., the third syntax) and processing_height (e.g., the fourth syntax) may indicate the width and height of the processing unit, respectively, and the overlapping description thereof will be omitted. The third syntax and the fourth syntax may be signaled based on the first syntax.

When the size of the processing unit is determined, the number of splits and the split method may be determined based on the size of the processing unit (S1320). The number of split regions, that is, the number of splits, may also be derived in a predefined manner based on the size of the processing unit, and the number of splits and the split method may be determined by the information on the number of splits and the split method that are explicitly signaled based on the size of the processing unit.

As an example, to derive the number of splits from other given information (e.g., information on the processing unit, etc.), a value obtained by basically dividing the size of the input data by the size of the processing unit may be derived as the number of splits. The following Expression 1 shows an example of defining the number of splits.

[Expression 1]

$$num\_processing\_unit\_minus1 = \text{ceil}\left(\frac{input\ picture\ size}{processing\ unit\ size}\right) - 1$$

In Expression 1, the number of processing units, that is, the number of split regions, may be expressed as an element (e.g., a syntax element) num_processing_unit_minus1 and may indicate a value obtained by subtracting 1 from the number of actual split regions. The number of split regions may be derived by rounding up a value obtained by dividing the size of the input data by the size of the processing unit, for example, a value using a ceil() function. As an example, when the processing unit is defined in width and height units as in Tables 4, 6, and 8, the split unit, that is, the processing unit, may also be expressed in width and height units. In this case, the width of the input picture may be divided by the width of the processing unit, and the height of the input picture may be divided by the height of the processing unit. For example, an element num_processing_column_unit_minus1 (e.g., a syntax element) represents the number of splits in the width direction, which may be a value obtained by subtracting 1 from the value obtained by dividing the width of the input image by the width of the processing unit (e.g., processing_width) (e.g., rounding up applied). In addition, an element num_processing_row_unit_minus1 (e.g., a syntax element) represents the number of splits in the height direction, which may be a value obtained by subtracting 1 from the value obtained by dividing the height of the input image by the height of the processing unit (e.g., processing_height) (e.g., rounding up applied). In this case, the number of split regions may be derived based on the value obtained by dividing the width of the input picture by the width of the processing unit and the value obtained by dividing the height of the input picture by the height of the processing unit. For example, the number of split regions may be derived by multiplying the two values.

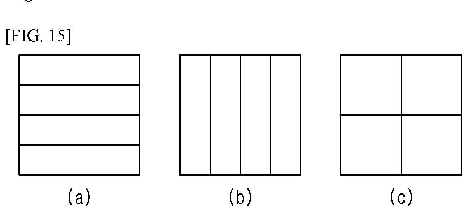

For example, when the size of the input image is 2073600 (1920 × 1080) and the size of the processing unit is 518,400, according to Expression 1, since the total number of processing units is 4, num_processing_unit_minus1 may be 3. This will be described in more detail with reference to FIG. 15.

FIG. 15 is a diagram for describing an example of input data being split according to an embodiment of the present disclosure. FIG. 15A illustrates an example of splitting input data in a height direction, and FIG. 15B illustrates an example of dividing input data in a width direction. FIG. 15C illustrates an example of splitting input data in both the width and height directions unlike FIGS. 15A and 15B. As an example, the split method may split the input data evenly in the width or height direction according to a predefined method, and the split direction may be encoded and signaled. In this case, the number of columns and the number of rows of the processing unit (e.g., num_processing_column_unit_minus1, num_processing_row_unit_minus1) may be derived. In this case, the value obtained by multiplying the number of columns of the processing unit by the number of rows of the processing unit (e.g., (num_processing_column_unit_minus1+1) × (num_processing_row_unit_minus+1)) may be derived as a larger value than the total number of processing units (e.g., num_processing_unit_minus1+1). For example, when the total number of processing units (e.g., num_processing_unit_minus1+1) is 7, information on the number of columns of the processing units (e.g., num_processing_column_unit_minus1) and information on the number of rows of the processing units (e.g., num_processing_row_unit_minus1) may be calculated as 3 and 1 or 1 and 3, respectively, so that the value obtained by multiplying the number of columns by the number of rows (e.g., (num_processing_column_unit_minus1+1) × (num_processing_row_unit_minus+1)) is 8. That is, when the total number of processing units num_processing_unit_minus1+1 is a prime number, it is impossible to split the input data into two-dimensional data, and thus it may be split into units that are not prime numbers. In this case, the number of splits in the width and height directions may be determined by comparing the sizes of the input data in the width and height directions. That is, when the width of the input image is larger, the input image is split more in the width direction. Such a rule may be predefined by the encoder/decoder so that the rule may operate in the same manner, and various other methods may be applied in addition to the above method.

As another example, the number of splits and split method of an image may be defined and explicitly signaled. That is, as described above, the values of the information on the number of processing units, the information on the number of columns of the processing units, the information on the number of rows of the processing units (e.g., num_processing_unit_minus1, num_processing_column_unit_minus1, num_processing_row_unit_minus1) and the syntax element indicating the split method (e.g., split_method) may be signaled to the bitstream. The elements including the syntax element will be described in detail below.

Meanwhile, each of the following Tables 9 to 16 is an example in which the number of splits and the split method are explicitly defined. First, Table 9 is as follows.

[Table 9]

| | Descriptor |
|---|---|
| **num_processing_unit_minus1** | u(8) |

A syntax element num_processing_unit_minus1 (e.g., a sixth syntax element) may be information on the number of splits, that is, the total number of processing units, and when 1 is added to the value of the sixth syntax element, it may mean the actual total number of splits. The sixth syntax element may be independently signaled as in Table 9.

The following Table 10 shows another example that explicitly defines the number of splits and the split method.

[Table 10]

| | Descriptor |
|---|---|
| **num_processing_unit minus1** | u(8) |
| **Split_method** | u(2) |

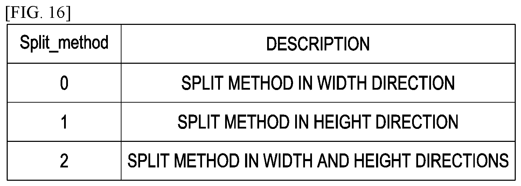

In addition to the above syntax element num_processing_unit_minus1 (e.g., the sixth syntax element), a syntax element split_method (e.g., a seventh syntax element) may be further signaled. The seventh syntax element may indicate a split method of input data. FIG. 16 illustrates an example of a split method according to an embodiment of the present disclosure. In the example of FIG. 16, when the split_method value is the first value (e.g., 0), it may mean that the split method in the width direction has been applied to the input image, and when the split_method value is the second value (e.g., 1), it may mean that the split method in the height direction has been applied. In addition, if the value of the seventh syntax element is the third value (e.g., 2), it may mean that the split method in the width and height directions were applied. That is, the split method according to the value of the seventh syntax element may be defined. However, since FIG. 16 corresponds to an embodiment of the present disclosure, the split method according to the actually defined value may be defined differently from the present example, and the seventh syntax element may have a fourth value to an $n^{th}$ value.

The following Table 11 shows another example that explicitly defines the number of splits and the split method.

[Table 11]

| | Descriptor |
|---|---|
| **num_processing_column_unit_minus1** | u(4) |
| **num_processing_row_unit_minus1** | u(4) |

A syntax element num_processing_column_unit_minus1 (e.g., an eighth syntax element) may be information on the number of columns of the split processing unit. That is, the syntax element num_processing_column_unit_minus1 represents the number of split regions (i.e., processing units) of the input image in the width direction and may be a value obtained by subtracting 1 from the value obtained by dividing the width of the input image by the width of the processing unit (e.g., processing_width) (e.g., rounding up applied). The eighth syntax element may be explicitly signaled to the bitstream.

A syntax element num_processing_row_unit_minus1 (e.g., a ninth syntax element) may be information on the number of rows of the split processing units. That is, the syntax element num_processing_row_unit_minus1 represents the number of split regions (i.e., processing units) of the input image in the height direction and may be a value obtained by subtracting 1 from the value obtained by dividing the height of the input image by the height of the processing unit (e.g.,

processing_height) (e.g., rounding up applied). The ninth syntax element may be explicitly signaled to the bitstream. As an example, the eighth syntax element and the ninth syntax element may be signaled independently.

The following Table 12 shows another example that explicitly defines the number of splits and the split method.

[Table 12]

|  | Descriptor |
|---|---|
| mun_processing_unit_info_present_flag | u(1) |
| if(num_processing unit_info_presentflag) |  |
| **num_processing_unit_minus1** | u(8) |

The syntax element num_processing_unit_info_present_ flag (e.g., the fifth syntax element) is information on whether the information on the number of processing units exists and may be signaled to the bitstream, and the overlapping description thereof will be omitted.

The syntax element num_processing_unit_minus1 (e.g., the sixth syntax element) is information on the total number of processing units, and when 1 is added thereto, it may mean the total number of splits. The sixth syntax element may be signaled based on another syntax element (e.g., the fifth syntax element) as in Table 12. As an example, when the value of the fifth syntax element is a specific value (e.g., 1), the sixth syntax element may be signaled. The overlapping description of the sixth syntax element will be omitted.

[Table 13]

|  | Descriptor |
|---|---|
| num_processing_unit_itifo_present_flag | u(1) |
| if(num_processing_unit_info_present_flag) |  |
| **num_processing_unit_minus1** | u(8) |
| **Split_method** | u(2) |
| } |  |

The syntax element num_processing_unit_info_present_flag (e.g., the fifth syntax element) is information on whether the information on the number of processing units exists and may be signaled to the bitstream, and the overlapping description thereof will be omitted.

The syntax element num_processing_unit_minus1 (e.g., the sixth syntax element) is the information on the number of splits, and when 1 is added thereto, it may mean the number of splits. The overlapping description of the sixth syntax element will be omitted.

The syntax element split_method (e.g., the seventh syntax element) is information on the split method and may be signaled based on another syntax element (e.g., the fifth syntax element). As an example, when the value of the fifth syntax element is a specific value (e.g., 1), the seventh syntax element may be signaled. The overlapping description of the seventh syntax element will be omitted.

The following Table 14 shows another example that explicitly defines the number of splits and the split method.

[Table 14]

|  | Descriptor |
|---|---|
| num_processing_unit_info_present_flag | u(1) |
| if(num_processing_unit_info_present_flag){ |  |
| **num_processing_column_unit_minus1** | u(4) |
| **num_processing_row_unit_minus1** | u(4) |
| } |  |

The syntax element num_processing_unit_info_present_flag (e.g., the fifth syntax element) is information on whether the information on the number of processing units exists, and the overlapping description thereof will be omitted.

The syntax element num_processing_column_unit_minus1 (e.g., the eighth syntax element) may be information on the number of columns of the split processing unit. The eighth syntax element may be signaled based on another syntax element (e.g., the fifth syntax element). As an example, when the value of the fifth syntax element is a specific value (e.g., 1), the eighth syntax element may be signaled. The overlapping description of the eighth syntax element will be omitted.

The syntax element num_processing_row_unit_minus1 (e.g., the ninth syntax element) may be information on the number of rows of the split processing units. The ninth syntax element may be signaled based on another syntax element (e.g., the fifth syntax element). As an example, when the value of the fifth syntax element is a specific value (e.g., 1), the ninth syntax element may be signaled. The overlapping description of the ninth syntax element will be omitted.

The following Table 15 shows another example that explicitly defines the number of splits and the split method.

[Table 15]

|  | Descriptor |
| --- | --- |
| if(!processing_unit_info_present_flag){ |  |
| num_processing_unit_info_present_flag | u(1) |
| if(num_processing_unit_info_present_flag){ |  |
| **num_processing_unit_minus1** | u(8) |
| **Split_method** | u(2) |
| } |  |
| } |  |

The syntax element num_processing_unit_info_present_flag (e.g., the fifth syntax element) is the information on whether the information on the number of processing units exists, and the fifth syntax element may be signaled based on another syntax element (e.g., the first syntax element processing_unit_info_present_flag). As an example, when the value of the first syntax element is a specific value (e.g., 1), the fifth syntax element may be signaled. The overlapping description of the fifth syntax element will be omitted.

The syntax element num_processing_unit_minus1 (e.g., the sixth syntax element) is the information on the number of splits, and when 1 is added thereto, it may mean the number of splits. The sixth syntax element may be signaled based on another syntax element (e.g., the fifth syntax element num_processing_unit_info_present_flag). As an example, when the value of the fifth syntax element is a specific value (e.g., 1), the sixth syntax element may be signaled. The overlapping description of the sixth syntax element will be omitted.

The syntax element split_method (e.g., the seventh syntax element) is information on the split method and may be signaled based on another syntax element (e.g., the fifth syntax element). As an example, when the value of the fifth syntax element is a specific value (e.g., 1), the seventh syntax element may be signaled. The overlapping description of the seventh syntax element will be omitted.

The following Table 16 shows yet another example that explicitly defines the number of splits and the split method.

[Table 16]

|  | Descriptor |
| --- | --- |
| if(!processing_unit_info_present_flag){ |  |
| num_processing_unit_info_present_flag | u(1) |
| if(num_processing_unit_info_present_flag){ |  |
| **num_processing_column_unit minus1** | u(4) |
| **num_processing_row_unit_minus1** | u(4) |
| } |  |
| | |  |

The syntax element num_processing_unit_info_present_flag (e.g., the fifth syntax element) is the information on whether the information on the number of processing units exists, and the fifth syntax element may be signaled based on another syntax element (e.g., the first syntax element processing_unit_info_present_flag). As an example, when the value of the first syntax element is a specific value (e.g., 0), the fifth syntax element may be signaled. The overlapping description of the fifth syntax element will be omitted.

The syntax element num_processing_column_unit_minus1 (e.g., the eighth syntax element) may be information on the number of columns of the split processing unit. The eighth syntax element may be signaled based on another syntax element (e.g., the fifth syntax element). As an example, when the value of the fifth syntax element is a specific value (e.g., 1), the eighth syntax element may be signaled. The overlapping description of the eighth syntax element will be omitted.

The syntax element num_processing_row_unit_minus1 (e.g., the ninth syntax element) may be information on the number of rows of the split processing units. The ninth syntax element may be signaled based on another syntax element (e.g., the fifth syntax element). As an example, when the value of the fifth syntax element is a specific value (e.g., 1), the ninth syntax element may be signaled. The overlapping description of the ninth syntax element will be omitted.

Once the number of splits and the split method are determined, split information may be generated (S1340). As an example, the split information includes the information on the number of splits and the split method and may further include the information on each input data split according to the number of splits and the split method (e.g., location information of the split data, additional index information from which a location may be identified, and the like in the entire input data). This process may be performed in the same manner in the encoding process of the encoder and the image decoding process to be described through FIG. 14, and operation S1340 may further include defining the size of each split region, defining a location of each split region, and defining split information of each region.

As an example, the defining of the size of the split region (e.g., a width of a column, a height of a row, etc.) may be performed based on the width and height of the input data (e.g., PicWidth and PicHeight). Each of the following Tables 17 to 26 shows an example of a method of defining the size of each split region.

[Table 17]

```
remainingWidth= PicWidth
    if(num_processing_unit_info_present_flag)
    {
            ColWidth = ceil(PicWidth/(num_processing_column_unit_minus1+1))
    }
    else
    {
        if(processing_unit_info_present_flag)
        {
        ColWidth =processing_width
        num_processing_column_unit_minus1=Ceil(PicWidth/processing_width) -1
        }
        else
        {
            processing_width= ProUnitWidth(general_level_idc)
            ColWidth =processing_width
            num_processing_column_unit_minus1=Ceil(PicWidth/ processing_width) -1
        }
    }
    for( i = 0; i  <=num_processing_column_unit_minus1; i++ )
    {
        if(remainingWidth >= ColWidth)
        {
          SplitColWidthVal[ i ] = ColWidth
          remainingWidth    -= SplitColWidthVal[ i ]
        }
        else
        {
          SplitColWidthVal[ i ]= remainingWidth
        }
    }
```

```
remainingHeight= PicHeight
if(num_processing_unit_info_present_flag)
    {
            RowHeight = ceil(PicHeight/(num_processing_row_unit_minus1+1))
    }
    else
    {
        if(processing_unit_info_present_flag)
        {
        RowHeight = processing_height
        num_processing_row_unit_minus1=Ceil(PicHeight/processing_height) -1
        }
        else
        {
            processing_height= ProUnitHeight(general_level_idc)
            RowHeight = processing_height
            num_processing_row_unit_minus1=Ceil(PicHeight/ processing_height) -1
        }
    }


for( j = 0; j    <=num_processing_row_unit_minus1; j++ )
{
    if(remainingHeight >= RowHeight)
    {
        SplitRowHeightVal[ j ] = RowHeight
        remainingHeight    -= SplitRowHeight[j ]
    }
    else
    {
        SplitRowHeightVal[j ]= remainingHeight
    }
}
```

[Table 18]

```
remainingWidth= PicWidth

processing_width= ProUnitWidth(general_level_idc)

ColWidth =processing_width

num_processing_column_unit_minus1=Ceil(PicWidth/ ColWidth) -1


for( i = 0; i    <=num_processing_column_unit_minus1; i++ )
{
    if(remainingWidth >= ColWidth)
    {
      SplitColWidthVal[ i ] = ColWidth
      remainingWidth    -= SplitColWidthVal[ i ]
    }
    else
    {
      SplitColWidthVal[ i ]= remainingWidth
    }
}


remainingHeight= PicHeight

processing_height= ProUnitHeight(general_level_idc)

RowHeight =processing_height

num_processing_row_unit_minus1=Ceil(PicHeight/ RowHeight) -1


for( j = 0; j    <=num_processing_row_unit_minus1; j++ )
{
    if(remainingHeight >= RowHeight)
    {
      SplitRowHeightVal[ j ] = RowHeight
      remainingHeight -= SplitRowHeightVal [ j ]
    }
    else
    {
      SplitRowHeightVal [ j ]= remainingHeight
    }
}
```

[Table 19]

```
remainingWidth= PicWidth
if(num_processing_unit_info_present_flag)
{
        ColWidth = ceil(PicWidth/(num_processing_column_unit_minus1+1))
}
else
{
        processing_width= ProUnitWidth(general_level_idc)
        ColWidth =processing_width
        num_processing_column_unit_minus1=Ceil(PicWidth/ processing_width) -1
}
for( i = 0; i   <=num_processing_column_unit_minus1; i++ )
{
    if(remainingWidth >= ColWidth)
    {
      SplitColWidthVal[ i ] = ColWidth
      remainingWidth   -= SplitColWidthVal[ i ]
    }
    else
    {
      SplitColWidthVal[ i ]= remainingWidth
    }
}
remainingHeight= PicHeight
if(num_processing_unit_info_present_flag)
{
        RowHeight = ceil(PicHeight/(num_processing_row_unit_minus1+1))
}
else
{
        processing_height= ProUnitHeight(general_level_idc)
        RowHeight = processing_height
        num_processing_row_unit_minus1=Ceil(PicHeight/ processing_height) -1
}
for( j = 0; j   <=num_processing_row_unit_minus1; j++ )
{
    if(remainingHeight >= RowHeight)
    {
      SplitRowHeightVal[ j ] = RowHeight
      remainingHeight   -= SplitRowHeight[j ]
    }
    else
    {
      SplitRowHeightVal[j ]= remainingHeight}}
```

[Table 20]

```
remainingWidth= PicWidth
ColWidth = ceil(PicWidth/(num_processing_column_unit_minus1+1))
for( i = 0; i  <=num_processing_column_unit_minus1; i++ )
{
    if(remainingWidth >= ColWidth)
    {
       SplitColWidthVal[ i ] = ColWidth
       remainingWidth   -= SplitColWidthVal[ i ]
     }
    else
    {
       SplitColWidthVal[ i ]= remainingWidth
    }
}
remainingHeight= PicHeight
RowHeight = ceil(PicHeight/(num_processing_row_unit_minus1+1))

for( j = 0; j  <=num_processing_row_unit_minus1; j++ )
{
    if(remainingHeight >= RowHeight)
    {
       SplitRowHeightVal[ j ] = RowHeight
       remainingHeight   -= SplitRowHeight[j ]
     }
    else
    {
       SplitRowHeightVal[j ]= remainingHeight
    }
}
```

[Table 21]

```
remainingWidth= PicWidth
if(processing_unit_info_present_flag)
    {
        ColWidth =processing_width
        num_processing_column_unit_minus1=Ceil(PicWidth/processing_width) -1
    }
    else
    {
        processing_width= ProUnitWidth(general_level_idc)
        ColWidth =processing_width
        num_processing_column_unit_minus1=Ceil(PicWidth/ processing_width) -1
    }
for( i = 0; i   <=num_processing_column_unit_minus1; i++ )
{
    if(remainingWidth >= ColWidth)
      {
        SplitColWidthVal[ i ] = ColWidth
        remainingWidth    -= SplitColWidthVal[ i ]
      }
    else
      {
        SplitColWidthVal[ i ]= remainingWidth
      }
}
remainingHeight= PicHeight
if(processing_unit_info_present_flag)
{
    RowHeight = processing_height
    num_processing_row_unit_minus1=Ceil(PicHeight/processing_height) -1
}
else
{
    processing_height= ProUnitHeight(general_level_idc)
    RowHeight = processing_height
    num_processing_row_unit_minus1=Ceil(PicHeight/ processing_height) -1
}
```

```
for( j = 0; j   <=num_processing_row_unit_minus1; j++ )
{
    if(remainingHeight >= RowHeight)
    {
        SplitRowHeightVal[ j ] = RowHeight
        remainingHeight   -= SplitRowHeight[j ]
    }
    else
    {
        SplitRowHeightVal[j ]= remainingHeight
    }
}
```

[Table 22]

```
remainingWidth= PicWidth

ColWidth =processing_width

num_processing_column_unit_minus1=Ceil(PicWidth/processing_width) -1

for( i = 0; i   <=num_processing_column_unit_minus1; i++ )
{
    if(remainingWidth >= ColWidth)
    {
        SplitColWidthVal[ i ] = ColWidth
        remainingWidth   -= SplitColWidthVal[ i ]
    }
    else
    {
        SplitColWidthVal[ i ]= remainingWidth
    }
}


remainingHeight= PicHeight

RowHeight = processing_height

num_processing_row_unit_minus1=Ceil(PicHeight/processing_height) -1


for( j = 0; j   <=num_processing_row_unit_minus1; j++ )
{
    if(remainingHeight >= RowHeight)
    {
        SplitRowHeightVal[ j ] = RowHeight
        remainingHeight   -= SplitRowHeight[j ]
    }
    else
    {
        SplitRowHeightVal[j ]= remainingHeight
    }
}
```

[Table 23]

```
remainingWidth= PicWidth
if(processing_unit_info_present_flag)
    {
            num_processing_column_unit_minus1=Ceil(PicWidth*PicHeight/processing_unit_size) -1
            ColWidth = ceil(PicWidth/(num_processing_column_unit_minus1+1))
    }
    else
    {
            processing_unit_size = ProUnitSize(general_level_idc)
            num_processing_column_unit_minus1=Ceil(PicWidth*PicHeight/processing_unit_size) -1
            ColWidth = ceil(PicWidth/(num_processing_column_unit_minus1+1))
    }
for( i = 0; i   <=num_processing_column_unit_minus1; i++ )
{
    if(remainingWidth >= ColWidth)
        {
          SplitColWidthVal[ i ] = ColWidth
          remainingWidth   -= SplitColWidthVal[ i ] ]
        }
    else
        {
          SplitColWidthVal[ i ]= remainingWidth
        }
}
SplitRowHeightVal[0]=PicHeight
```

[Table 24]

```
remainingHeight= PicHeight
if(processing_unit_info_present_flag)
      {
            num_processing_row_unit_minus1=Ceil(PicWidth*PicHeight/processing_unit_size) -1
            RowHeight = ceil(PicHeight/(num_processing_row_unit_minus1+1))
      }
      else
      {
            processing_unit_size = ProUnitSize(general_level_idc)
            num_processing_row_unit_minus1=Ceil(PicWidth*PicHeight/processing_unit_size) -1
            RowHeight = ceil(PicHeight/(num_processing_row_unit_minus1+1))
      }
for( j = 0; j   <=num_processing_row_unit_minus1; j++ )
{
      if(remainingHeight >= RowHeight)
      {
        SplitRowHeightVal[ j ] =RowHeight
        remainingHeight   -= SplitRowHeightVal[ j ]
      }
      else
      {
        SplitRowHeightVal[ j ]= remainingHeight
      }
}
SplitColWidthVal[0]=PicWidth
```

[Table 25]

```
if(!processing_unit_info_present_flag)
{
 processing_unit_size = ProUnitSize(general_level_idc)
}
if(split_mode ==0)
{
 remainingWidth= PicWidth
 num_processing_column_unit_minus1=Ceil(PicWidth*PicHeight/processing_unit_size) -1
 ColWidth = ceil(PicWidth/(num_processing_column_unit_minus1+1))
 for( i = 0; i   <=num_processing_column_unit_minus1; i++ )
 {
    if(remainingWidth >= ColWidth)
    {
    SplitColWidthVal[ i ] = ColWidth
    remainingWidth    -= SplitColWidthVal[ i ] ]
    }
    else
    {
    SplitColWidthVal[ i ]= remainingWidth
    }
 }
 SplitRowHeightVal[0]=PicHeight
}
else if(split_mode==1)
{
 remainingHeight= PicHeight
 num_processing_row_unit_minus1=Ceil(PicWidth*PicHeight/processing_unit_size) -1
 RowHeight = ceil(PicHeight/(num_processing_row_unit_minus1+1))
 for( j = 0; j   <=num_processing_row_unit_minus1; j++ )
 {
    if(remainingHeight >= RowHeight)
    {
    SplitRowHeightVal[ j ] =RowHeight
    remainingHeight    -= SplitRowHeightVal[ j ]
    }
    else
    {
    SplitRowHeightVal[ j ]= remainingHeight
    }
 }
 SplitColWidthVal[0]=PicWidth
}
```

```
        else
        {
          remainingWidth= PicWidth
          remainingHeight= PicHeight
          NumUnit(PicWith, PicHeight, processing_unit_size, num_processing_row_unit_minus1,
        num_processing_column_unit_minus1 )
          ColWidth = ceil(PicWidth/(num_processing_column_unit_minus1+1))
          RowHeight = ceil(PicHeight/(num_processing_row_unit_minus1+1))

          for( i = 0; i  <=num_processing_column_unit_minus1; i++ )
          {
            if(remainingWidth >= ColWidth)
            {
            SplitColWidthVal[ i ] = ColWidth
            remainingWidth    -= SplitColWidthVal[ i ] ]
            }
            else
            {
            SplitColWidthVal[ i ]= remainingWidth
            }
          }
          for( j = 0; j  <=num_processing_row_unit_minus1; j++ )
          {
          if(remainingHeight >= RowHeight)
          {
          SplitRowHeightVal[ j ] =RowHeight
          remainingHeight    -= SplitRowHeightVal[ j ]
          }
          else
          {
          SplitRowHeightVal[ j ]= remainingHeight
          }
          }
        }
```

Table 17 shows an example of a case in which only one of num_processing_unit_info_present_flag (e.g., the fifth syntax element) and processing_unit_info_present_flag (e.g., the first syntax element) may have the first value (e.g., 1) or both may have the second value (e.g., 0). Table 17 also shows an example of a case in which the split unit and size are defined in width and height directions and may be associated with Tables 15 and 16.

Table 18 is an example of a method of defining the size of the split region when the information on the number of splits and the size of the split unit are not encoded and the related information is predefined. This may be associated with the case in which the size of the processing unit may be specified in operation S1320 or calculated from the given information. The syntax elements ProUnitWidth(general_level_idc) and ProUnitHeight(general_level_idc) may mean functions of returning the width and height of the processing unit predefined according to a level identifier (e.g., general_level_idc), respectively. The level identifier general_level_idc may be information for identifying a technology of configuring the corresponding encoder/decoder and the amount of required resources (e.g., PTL information).

Table 19 may be associated with Table 15. In Table 19, the size of the split region may be defined according to the presence or absence of the information on the number of splits.

Table 20 may be associated with Table 12. In this case, the information on the number of splits may always be defined, and the size of the split region may be defined accordingly.

Table 21 may be associated with Table 11. In this case, the size of the split region may always be defined according to the presence or absence of the split size information.

Table 22 may be associated with Table 13. In this case, the split unit size information may always be defined, and the size of the split region may be defined accordingly.

Tables 23 and 24 may be associated with the example of Table 10. More specifically, Table 23 may show a case in which the width split of the input image is predefined, and Table 24 may show a case in which the height split of the input image is predefined.

Table 25 may be associated with the example of Table 16. ProUnitSize(general_level_idc) may represent a function of returning the split size according to general_level_idc, and NumUnit(PicWith, PicHeight, processing_unit_size, num_processing_row_unit_minus1, num_processing_column_unit_minus1) may represent a function of receiving the width and height of the input image and the split size as factors and returning the number of width splits and the number of height splits.

Meanwhile, as an example, the defining of the location of each split region may be performed by specifying the location in the input image and performed based on a boundary location of rows and a boundary location of columns. The following Tables 26 and 27 are examples of the process of defining the location of each split region.

[Table 26]
$$\text{for( SplitColBdVal[ 0 ] = 0, i = 0; i} <= \textbf{num\_processing\_column\_unit\_minus1}; \text{i++ )}$$
$$\text{SplitColBdVal [ i + 1 ] = SplitColBdVal [ i ] + SplitColWidthVal [ i ]}$$

[Table 27]
$$\text{for( SplitRowBdVal[ 0 ] = 0, i = 0; i} <= \textbf{num\_processing\_row\_unit\_minus1}; \text{i++ )}$$
$$\text{SplitRowBdVal [ i + 1 ] = SplitRowBdVal [ i ] + SplitRowHeightVal [ i ]}$$

In Tables 26 and 27, SplitColBdVal and SplitRowBdVal may represent a boundary location of columns and a boundary location of rows, respectively. Table 26 may show an example of a method of defining a boundary location of columns, and Table 27 may show an example of a method of defining a boundary location of rows. As an example, according to the method of splitting an input image, only one of the two split methods disclosed in Tables 26 and 27 or both may be applied. For example, when the input image is split in a column direction, only the boundary location of columns may be defined, and when the input image is split in a row direction, only the boundary location of rows may be defined. Meanwhile, when the input image is split in both directions, the boundary locations of both columns and rows may need to be defined. For example, when the input image is split only in the column direction, SplitRowBdVal[0] may be 0, and when the input image is split only in the row direction, SplitColBdVal[0] may be 0.

Meanwhile, as an example, the defining of the split information of each region may include a process of deriving an index of each split region. The following Tables 28 and 29 may show examples of the process of calculating a location index of each split region.

[Table 28]
```
SplitX = 0
for( AddrX = 0; AddrX  <=  PicWidth; AddrX ++ ) {
   if(AddrX  = = SplitColBdVal [ SplitRegionX + 1 ] )      SplitX ++
AddrXToSplitColBd[AddrX ] = SplitColBdVal[SplitX]
AddrXToSplitColIdx[AddrX ] = SplitX
}
```

[Table 29]
```
SplitY = 0
for( AddrY = 0; AddrY  <=  PicHeight; AddrY ++ ) {
   if(AddrY  = = SplitRowBdVal [ SplitRegionY + 1 ] )      SplitY ++
AddrYToSplitRowBd[AddrY ] = SplitRowBdVal[ SplitY ]
AddrYToSplitRowIdx[AddrY ] = SplitY
}
```

SplitX in Tables 28 and 29 may show width location indices (indices of SplitColBdVal and SplitColBdWidth) of the split region (the processing unit), and SplitY may show height location indices (indices of SplitRowBdVal and SplitRowBdHeight) of the split region. The location indices of the split region may be defined as Split X and Split Y, respectively, or defined by combining the two values into one index. The following Expression 2 shows an example of an expression for expressing two values as one index.

$$[\text{Expression 2}]$$
$$SplitIndex = SplitX + (num\_processing\_row\_unit\_minus1 + 1) * SplitY$$

As described above, one index SplitIndex may represent the width location index of the split region, that is, the processing unit (the indices of SplitColBdVal and SplitColBdWidth), SplitY may represent the height location index of the processing unit (the indices of SplitRowBdVal and SplitRowBdHeight), and the overlapping description of num_processing_row_unit_minus1 will be omitted.

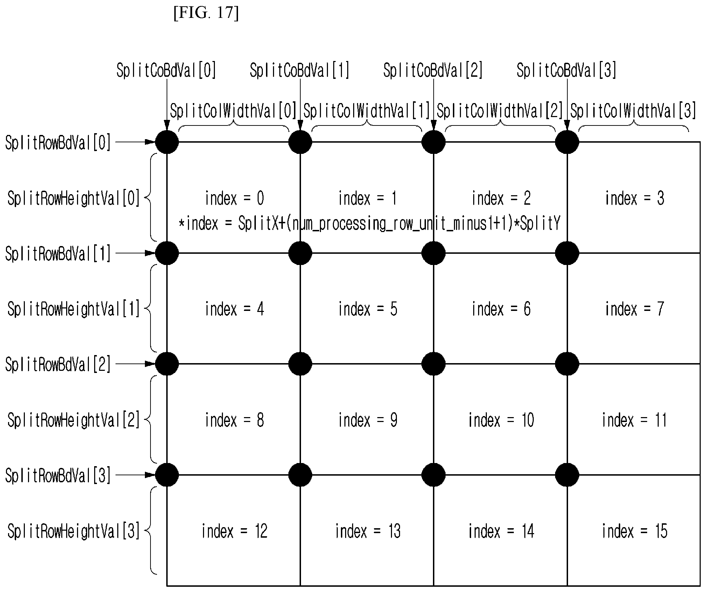

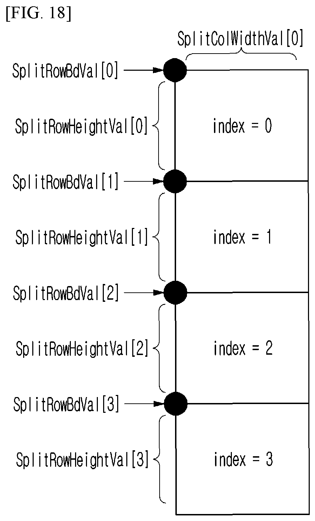

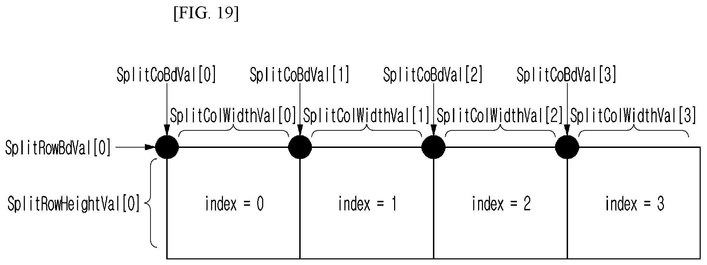

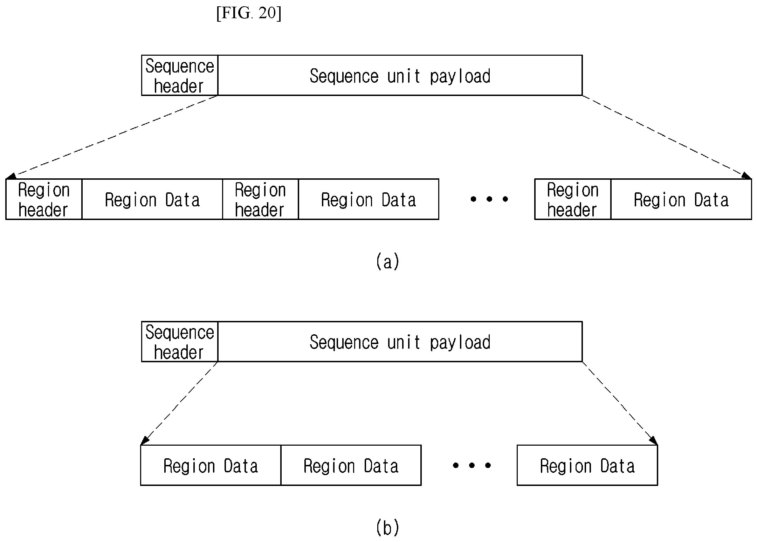

Finally, the split information may be generated (S1340), which will be described with reference to FIGS. 17, 18, 19, and 20. More specifically, FIGS. 17 to 19 are diagrams illustrating examples of generating and configuring the split information, and FIG. 20 is a diagram illustrating an example of a configuration of a bitstream accordingly. First, the split information may include information on the split region and also include information on the location of the split region. As an example, the information on the location of the split region may include a split region location index. Referring to FIGS. 17 to 19, boundaries of rows, heights of the rows, boundaries of columns, and widths of the columns of FIGS. 17 to 19 may be represented by SplitRowBdVal, SplitRowHeightVal, SplitColBdVal, and SplitColWidthVal, respectively, and the overlapping description thereof will be omitted. According to FIG. 17, when the input image is split into processing units for a plurality of rows and columns, an index may be assigned to each split region (processing unit) from an upper left to a lower right by assigning numbers from the left to the right and from the top to the bottom of the input image. The index number may be an integer value starting from 0 and increasing by 1. According to FIG. 18, when the input image is split into processing units for a plurality of rows and a single column, an index may be assigned to each split region (processing unit) by assigning numbers from the top to the bottom of the input image. According to FIG. 19, when the input image is split into processing units for a single row and a plurality of columns, an index may be assigned to each split region (processing unit) by assigning numbers from the left to the right of the input image. The following Tables 30 to 34 may show examples of the definition of the indices of the split regions. First, Table 30 is as follows.

[Table 30]

|  | Descriptor |
| --- | --- |
| SplitX | u(4) |
| SplitY | u(4) |

A syntax element SplitX (e.g., a tenth syntax element) may represent an index of the split region (i.e., the processing unit) in the width direction.

A syntax element SplitY (e.g., an eleventh syntax element) represents an index of the split region in the height direction. SplitX and SplitY may be derived from Tables 28, 29, and the like. In addition, SplitX and SplitY may be signaled independently.

[Table 31]

|  | Descriptor |
| --- | --- |
| SplitIndex | u(8) |

A syntax element SplitIndex (e.g., a twelfth syntax element) may represent a unified index defined through SplitX and SplitY. This may be derived from Expression 2 and signaled to the bitstream.

[Table 32]

|  | Descriptor |
| --- | --- |
| split_index_present_flag | u(1) |

A syntax element split_index_present_flag (e.g., a thirteenth syntax element) may indicate whether the index of the split region is defined. That is, the syntax element split_index_present_flag may be split index presence information. When the value of the thirteenth syntax element is the first value (e.g., 1), it may mean that the split region has been defined in the bitstream, and when the value of the thirteenth syntax element is not the first value, that is, is any other value, it may mean that the index of the split region is not defined in the bitstream.

[Table 33]

|  | Descriptor |
|---|---|
| If(split_index_present_flag){ |  |
| SplitX | u(4) |
| SplitY | u(4) |
| } |  |

SplitX (e.g., the tenth syntax element) and SplitY (e.g., the eleventh syntax element) may be signaled based on another syntax element (e.g., the thirteenth syntax element split_index_present_flag). As an example, when the value of the thirteenth syntax element is the first value (e.g., 1), the tenth syntax element and the eleventh syntax element may be signaled. The overlapping description of each syntax element will be omitted.

[Table 34]

|  | Descriptor |
|---|---|
| If(split_index_present_flag){ |  |
| SplitIndex | u(8) |
| } |  |

The SplitIndex (e.g., the twelfth syntax element) may be signaled based on another syntax element (e.g., the thirteenth syntax element split_index_present_flag). As an example, when the value of the thirteenth syntax element is the first value (e.g., 1), the twelfth syntax element may be signaled. The overlapping description of each syntax element will be omitted.

The split information generated in this way may be encoded as a bitstream of FIG. 20 and signaled to the decoder side. Referring to FIGS. 20A and 20B, the bitstream may include a sequence header and a sequence unit payload, and the sequence unit payload may include a plurality of region headers and a plurality of region data, as in FIG. 20A. Alternatively, the region header may be omitted as in FIG. 20B. Here, the region data may include encoded data of each split region (i.e., processing unit), and the region header may include information from which the encoded data (e.g., syntax elements SplitX, SplitY, and/or SplitIndex) may be identified. As an example, when the order of encoding/decoding of the split region (the processing unit) is predefined (e.g., a raster scanning order, etc.), the storage order in the bitstream may be index information, and thus in this case, the index information may not be encoded. In this case, the bitstream may not include the region header as in FIG. 20B.

Meanwhile, when describing the above embodiment of the present disclosure with reference to FIG. 14 in terms of the image decoder, operation S1410 of determining of the PTL may include a process of decoding or deriving and acquiring the information defined in operations S1320 and S1330 along with the information defined in operation S1310 of FIG. 13. That is, since all descriptions of the information described in operations S1310, 1320, and S1330 and the corresponding operation may be applied, the overlapping description thereof will be omitted.

Meanwhile, operation S1420 of generating the split information at the decoder side may correspond to operation S1340 of FIG. 13. That is, since all descriptions of the information described in operation S1340 and the corresponding operation may be applied, the overlapping description thereof will be omitted. Meanwhile, during this process, as an example, the split input data may be connected and reconstructed back to its original form through the generated split information in the decoder. This will be described with reference to Table 35 showing an example of the operation of the decoder.

[Table 35]

```
SplitX=Index%(num_processing_row_unit_minus1+1)

SplitY=floor(Index/(num_processing_row_unit_minus1+1))


for(i=0;i< SplitColWidthVal[SplitX];i++)

{

    for(j=0; j< SplitRowHeightVal[SplitY]; j++)

    {

        ConcatPic[i+j*PicWidth+SplitColBdVal[SplitX]+SplitRowBdVal[SplitY]*PicWidth] =
        DecodedSplitPic[i+j*SplitColWidthVal[SplitX]

    }

}
```

When the bitstream includes the location index information in the split information, and the location indices may be defined as SplitX and SplitY, SplitRowBdVal, SplitColBdVal, SplitColBdWidth, and SplitRowBdHeight may be derived using that information. As another example, when the location index information is derived as a single index (e.g., SplitIndex), SplitX and SplitY may be obtained by applying Expression 2 inversely. DecodedSplitPic included in Table 35 may represent a decoded split region, and ConcatPic may represent each split region merged into its original form. As described with reference to FIG. 20, in FIG. 20A, the region data may be encoded data of each split region, and the region header may be information (e.g., SplitX, SplitY, and/or SplitIndex) from which the encoded data may be identified. Unlike FIG. 20A, in FIG. 20B, the region header may not be defined. This may indicate that, when the order of encoding/decoding of the split region is predefined (e.g., a raster scanning order, etc.), the storage order in the bitstream may be the index information. Accordingly, the index information may not be included in the split information. That is, the index information may not be signaled to the bitstream. Since this is as described with reference to other tables, the overlapping description thereof will be omitted.

According to the present disclosure, the input data may be split effectively considering the resources and the peak memory, and the split regions may be reconstructed to their original forms.

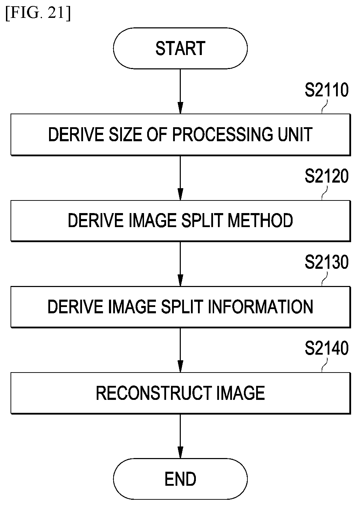

FIG. 21 is a diagram illustrating an image decoding method according to an embodiment of the present disclosure. The image decoding method of FIG. 21 may be performed by an image decoding apparatus and may be based on the above embodiment. Accordingly, hereinafter, the overlapping description of the above embodiment will be omitted.

As an example, the size of the processing unit of the image may be derived (S2110) based on the available resources and peak memory of the decoder for image decoding. As described above, the available resources, that is, the available resources and the peak memory, of the decoder may vary according to the performance of the decoder and also vary according to the hardware configuration of the decoder, such as a GPU, a CPU, a RAM, and the like. In the decoding process, the peak memory may be determined according to the size of the input data, and the size of the processing unit may vary according to the performance of the decoder. The process of deriving the size of the processing unit based on the peak memory and the resources is as described above. Thereafter, the image split method may be derived (S2120) based on the derived size of the processing unit. The image split method may include the number of processing units, that is, the number of split regions, etc. Thereafter, image split information may be derived (S2130) based on the split method. The image split information may include location information of the processing unit. Thereafter, the image may be reconstructed by connecting the processing units of the image (S2140) based on the derived image split information. This process may include a process of determining the location of the processing unit in the image based on the image split information. As an example, the location of the processing unit may be determined based on a location index of the processing unit. Here, the location index may include a width index and a height index, and the width index and the height index may be represented by the respective indices or as a single index. In addition, the location index may be derived based on boundary location information on a row and boundary location information on a column. As an example, the location information of the processing unit may include boundary location information on a row and boundary location information on a column. Meanwhile, the size of the processing unit may be derived based on the number of width splits and the number of height splits of the image. Here, the number of width splits and the number of height splits of the image may be obtained from the bitstream. As an example, the size of the processing unit may be derived additionally based on the size of the maximum processing unit included in the PTL information.

Meanwhile, as an example, the split method, the size of the processing unit, the size of the maximum processing unit, and the like may be signaled to the bitstream or derived.

Meanwhile, since FIG. 21 corresponds to an embodiment of the present disclosure, it is obvious that the order of some operations may be changed, some operations may be omitted, or some operations may be added.

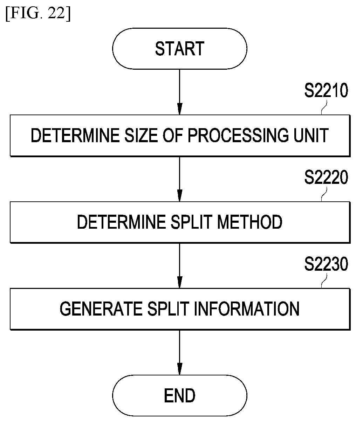

FIG. 22 is a diagram illustrating an image encoding method according to an embodiment of the present disclosure.

The image encoding method of FIG. 22 may be performed by an image encoding apparatus and may be based on the above embodiment. Accordingly, hereinafter, the overlapping description of the above embodiment will be omitted.

First, for image encoding, the size of the processing unit of the image may be determined (S2210). The size of the processing unit may be adaptively determined based on the available resources and peak memory of the device. That is, the available resources, that is, the available resources and the peak memory, may vary according to the performance of the device and also vary according to the hardware configuration of the device, such as a GPU, a CPU, a RAM, and the like. Thereafter, the image split method may be determined (S2220) based on the determined size of the processing unit. The image split method may include the number of processing units, that is, the number of split regions, etc. The image split information may be generated (S2230) based on the split method. In this case, the image split information may include the location information of the processing unit. The image split information may include the location information of the processing unit. This process may include a process of determining the location of the processing unit in the image based on the image split information. Meanwhile, the location information of the processing unit may include the location index of the processing unit, and the location index may include the above width index and height index. The width index and the height index may be composed of separate indices or represented by a single index. In addition, the location index may be derived based on boundary location information on a row and boundary location information on a column. As an example, the location information of the processing unit may include boundary location information on a row and boundary location information on a column. Meanwhile, the size of the processing unit may be derived based on the number of width splits and the number of height splits of the image. Here, the number of width splits and the number of height splits of the image may be obtained from the bitstream. As an example, the size of the processing unit may be derived additionally based on the size of the maximum processing unit included in the PTL information. In the decoding process, the peak memory may be determined according to the size of the input data, and the size of the processing unit may vary according to the performance of the decoder. Since the process of deriving the size of the processing unit based on the peak memory and the resources is as described above, the overlapping description thereof will be omitted.

All the names of the above syntax elements are arbitrarily designated for the clarity of description and do not limit the names of the corresponding syntax elements. In addition, the first syntax element to the thirteenth syntax element may be referred to as first information to thirteenth information, respectively. In addition, the first syntax element to the thirteenth syntax element may be acquired from the bitstream, or may be derived by other syntax elements, which may also be included in the embodiment of the present disclosure.

In addition, the bitstream generated by the image encoding method may be stored in a non-transitory computer-readable recording medium.

In addition, as another example, the bitstream generated by the image encoding method may be transmitted to another device (e.g., an image decoding apparatus, etc.). In this case, the method of transmitting a bitstream may include a process of transmitting a bitstream.

While the exemplary methods of the present disclosure described above are represented as a series of operations for clarity of description, it is not intended to limit the order in which the steps are performed, and the steps may be performed simultaneously or in different order as necessary. In order to implement the method according to the present disclosure, the described steps may further include other steps, may include remaining steps except for some of the steps, or may include other additional steps except for some steps.

In the present disclosure, the image encoding apparatus or the image decoding apparatus that performs a predetermined operation (step) may perform an operation (step) of confirming an execution condition or situation of the corresponding operation (step). For example, if it is described that predetermined operation is performed when a predetermined condition is satisfied, the image encoding apparatus or the image decoding apparatus may perform the predetermined operation after determining whether the predetermined condition is satisfied.

The various embodiments of the present disclosure are not a list of all possible combinations and are intended to describe representative aspects of the present disclosure, and the matters described in the various embodiments may be applied independently or in combination of two or more.

Embodiments described in the present disclosure may be implemented and performed on a processor, microprocessor, controller, or chip. For example, the functional units shown in each drawing may be implemented and performed on a computer, processor, microprocessor, controller, or chip. In this case, information for implementation (e.g., information on instructions) or algorithm may be stored in a digital storage medium.

In addition, the decoder (decoding apparatus) and the encoder (encoding apparatus), to which the embodiment(s) of the present disclosure are applied, may be included in a multimedia broadcasting transmission and reception device, a mobile communication terminal, a home cinema video device, a digital cinema video device, a surveillance camera, a video chat device, a real time communication device such as video communication, a mobile streaming device, a storage medium, a camcorder, a video on demand (VoD) service providing device, an OTT video (over the top video) device, an Internet streaming service providing device, a three-dimensional (3D) video device, an argument reality (AR) device, a video telephony video device, a transportation terminal (e.g., vehicle (including autonomous vehicle) terminal, robot terminal, airplane terminal, ship terminal, etc.) and a medical video device, and the like, and may be used to process video signals or data signals. For example, the OTT video devices may include a game console, a blu-ray player, an Internet access TV, a home theater system, a smartphone, a tablet PC, a digital video recorder (DVR), or the like.

Additionally, a processing method to which the embodiment(s) of the present disclosure is applied may be produced in the form of a program executed by a computer and stored in a computer-readable recording medium. Multimedia data having a data structure according to the embodiment(s) of this document may also be stored in a computer-readable recording medium. Computer-readable recording media include all types of storage devices and distributed storage devices that store computer-readable data. Computer-readable recording media include, for example, Blu-ray Disc (BD), Universal Serial Bus (USB), ROM, PROM, EPROM, EEPROM, RAM, CD-ROM, magnetic tape, floppy disk, and optical data storage device. Additionally, computer-readable recording media include media implemented in the form of carrier waves (e.g., transmission via the Internet). Additionally, the bitstream generated by the encoding method may be stored in a computer-readable recording medium or transmitted through a wired or wireless communication network.

Additionally, the embodiment(s) of the present disclosure may be implemented as a computer program product by program code, and the program code may be executed on a computer by the embodiment(s) of the present disclosure. The program code may be stored on a carrier readable by a computer.

FIG. 21 is a view illustrating an example of a content streaming system to which embodiments of the present disclosure are applicable.

Referring to FIG. 21, the content streaming system, to which the embodiment of the present disclosure is applied, may largely include an encoding server, a streaming server, a web server, a media storage, a user device, and a multimedia input device.

The encoding server compresses contents input from multimedia input devices such as a smartphone, a camera, a camcorder, etc. into digital data to generate a bitstream and transmits the bitstream to the streaming server. As another example, when the multimedia input devices such as smartphones, cameras, camcorders, etc. directly generate a bitstream, the encoding server may be omitted.

The bitstream may be generated by an image encoding method or an image encoding apparatus, to which the embodiment of the present disclosure is applied, and the streaming server may temporarily store the bitstream in the process of transmitting or receiving the bitstream.

The streaming server transmits the multimedia data to the user device based on a user's request through the web server, and the web server serves as a medium for informing the user of a service. When the user requests a desired service from the web server, the web server may deliver it to a streaming server, and the streaming server may transmit multimedia data to the user. In this case, the contents streaming system may include a separate control server. In this case, the control server serves to control a command/response between devices in the contents streaming system.

The streaming server may receive contents from a media storage and/or an encoding server. For example, when the contents are received from the encoding server, the contents may be received in real time. In this case, in order to provide a smooth streaming service, the streaming server may store the bitstream for a predetermined time.

Examples of the user device may include a mobile phone, a smartphone, a laptop computer, a digital broadcasting terminal, a personal digital assistant (PDA), a portable multimedia player (PMP), navigation, a slate PC, tablet PCs, ultrabooks, wearable devices (e.g., smartwatches, smart glasses, head mounted displays), digital TVs, desktops computer, digital signage, and the like.

Each server in the contents streaming system may be operated as a distributed server, in which case data received from each server may be distributed.

FIG. 22 is a diagram illustrating another example of a content streaming system to which embodiments of the present disclosure are applicable.

Referring to FIG. 22, in an embodiment such as VCM, a task may be performed in a user terminal or a task may be performed in an external device (e.g., streaming server, analysis server, etc.) according to the performance of the device, the user's request, the characteristics of the task to be performed, etc. In this way, in order to transmit information necessary to perform a task to an external device, the user terminal may generate a bitstream including information necessary to perform the task (e.g., information such as task, neural network and/or usage) directly or through an encoding server.

In an embodiment, the analysis server may perform a task requested by the user terminal after decoding the encoded information received from the user terminal (or from the encoding server). At this time, the analysis server may transmit the result obtained through the task performance back to the user terminal or may transmit it to another linked service server (e.g., web server). For example, the analysis server may transmit a result obtained by performing a task of determining a fire to a fire-related server. In this case, the analysis server may include a separate control server. In this case, the control server may serve to control a command/response between each device associated with the analysis server and the server. In addition, the analysis server may request desired information from a web server based on a task to be performed by the user device and the task information that may be performed. When the analysis server requests a desired service from the web server, the web server transmits it to the analysis server, and the analysis server may transmit data to the user terminal. In this case, the control server of the content streaming system may serve to control a command/response between devices in the streaming system.

[Industrial Applicability]

Embodiments according to the present disclosure may be used to encode/decode an image.

**Claims**

1. An image decoding method comprising:

    deriving a size of a processing unit of an image based on available resources and a peak memory of a decoder;
    deriving a split method of the image based on the derived size of the processing unit;
    deriving split information of the image based on the split method; and
    connecting and reconstructing the processing unit of the image based on the derived split information of the image,
    wherein the split information of the image includes location information of the processing unit.

2. The image decoding method of claim 1, wherein the connecting and reconstructing of the processing unit of the image includes determining a location of the processing unit in the image based on the split information of the image.

3. The image decoding method of claim 2, wherein the location of the processing unit is determined based on a location index of the processing unit.

4. The image decoding method of claim 3, wherein the location index includes a width index and a height index.

5. The image decoding method of claim 3, wherein the location index is derived based on boundary location information on a row and boundary location information on a column.

6. The image decoding method of claim 1, wherein the location information of the processing unit includes boundary location information on a row and boundary location information on a column.

7. The image decoding method of claim 1, wherein the size of the processing unit is derived based on the number of width splits and the number of height splits of the image.

8. The image decoding method of claim 7, wherein the number of width splits and the number of height splits of the image are acquired from a bitstream.

9. The image decoding method of claim 1, wherein the size of the processing unit is derived additionally based on a size of a maximum processing unit included in profile, tier, and level information.

10. An image encoding method comprising:

    determining a size of a processing unit of an image;
    determining a split method of the image based on the determined size of the processing unit; and
    generating split information of the image based on the split method,
    wherein the split information of the image includes location information of the processing unit.

11. The image encoding method of claim 10, wherein the location information of the processing unit includes a location index of the processing unit.

12. The image encoding method of claim 11, wherein the location index includes a width index and a height index.

13. A bitstream transmitting method comprising

transmitting a bitstream generated by an image encoding method,
wherein the image encoding method includes:

determining a size of a processing unit of an image;
determining a split method of the image based on the determined size of the processing unit; and
generating split information of the image based on the split method, and
the split information of the image includes location information of the processing unit.

14. A computer readable recording medium in which the bitstream generated by the image encoding method of claim 10 is recorded.

[FIG. 1]

10

11
FEATURE ACQUISITION UNIT

12
ENCODING UNIT

13
TRANSMISSION UNIT

20

23
TASK ANALYSIS/
/RENDERING UNIT

22
DECODING UNIT

21
RECEPTION UNIT

[FIG. 2]

[FIG. 3]

EP 4 604 525 A1

[FIG. 4]

[FIG. 5]

START

PREDICT — S510

RESIDUAL PROCESSING — S520

ENCODE FEATURE/FEATURE MAP
INCLUDING PREDICTION INFORMATION
AND RESIDUAL INFORMATION — S530

END

[FIG. 6]

```
                    ┌─────────────┐
                    │    START    │
                    └──────┬──────┘
                           │                    S610
              ┌────────────▼────────────────────────┐
              │        ACQUIRE INFORMATION ON        │
              │  FEATURE/FEATURE MAP FROM BITSTREAM  │
              └────────────┬────────────────────────┘
                           │                    S620
              ┌────────────▼────────────────────────┐
              │               PREDICT               │
              └────────────┬────────────────────────┘
                           │                    S630
              ┌────────────▼────────────────────────┐
              │         RESIDUAL PROCESSING          │
              └────────────┬────────────────────────┘
                           │                    S640
              ┌────────────▼────────────────────────┐
              │     RECONSTRUCT FEATURE/FEATURE MAP  │
              └────────────┬────────────────────────┘
                           │                    S650
              ┌────────────▼────────────────────────┐
              │      IN-LOOP FILTERING (OPTIONAL)    │
              └────────────┬────────────────────────┘
                           │
                    ┌──────▼──────┐
                    │     END     │
                    └─────────────┘
```

[FIG. 7]

| | 710 | 720 | 730 | 740 |
|---|---|---|---|---|
| Image/Video → | Feature Extraction Network | Encoding Apparatus | Decoding Apparatus | Task Network |

Extracted feature map     Bitstream     Reconstructed feature map

[FIG. 8]

☐ CTU    ☐ Tile    ☐ Slice

[FIG. 9]

EP 4 604 525 A1

[FIG. 10]

[FIG. 11]

| | |
|---|---|
| FEATURE CODING LAYER | ~1130 |
| NEURAL NETWORK (FEATURE) ABSTRACTION LAYER | ~1120 |
| FEATURE EXTRACTION LAYER | ~1110 |

[FIG. 12]

| NNAL unit header | NNAL unit payload<br>(RBFP: Raw Byte Feature Payload) |
|---|---|

| Group<br>header | Group Data |
|---|---|

Coding indicator

| Feature<br>channel | | Feature<br>channel | Feature<br>channel | | Feature<br>channel | | Feature<br>channel | | Feature<br>channel |
|---|---|---|---|---|---|---|---|---|---|

| TYPE | PREDICTION | side<br>information | Residual<br>Data |
|---|---|---|---|

EP 4 604 525 A1

[FIG. 13]

START

S1310

DETERMINE PROFILE, TIER, AND LEVEL

S1320

DETERMINE SIZE OF PROCESSING UNIT

S1330

DETERMINE NUMBER OF SPLITS
AND SPLIT METHOD

S1340

GENERATE SPLIT INFORMATION

END

[FIG. 14]

[FIG. 15]

(a)        (b)        (c)

[FIG. 16]

| Split_method | DESCRIPTION |
|:---:|:---:|
| 0 | SPLIT METHOD IN WIDTH DIRECTION |
| 1 | SPLIT METHOD IN HEIGHT DIRECTION |
| 2 | SPLIT METHOD IN WIDTH AND HEIGHT DIRECTIONS |

[FIG. 17]

SplitCoBdVal[0]  SplitCoBdVal[1]  SplitCoBdVal[2]  SplitCoBdVal[3]

SplitColWidthVal[0] SplitColWidthVal[1] SplitColWidthVal[2] SplitColWidthVal[3]

SplitRowBdVal[0] →

SplitRowHeightVal[0]
   index = 0        index = 1        index = 2        index = 3

*index = SplitX+(num_processing_row_unit_minus1+1)*SplitY

SplitRowBdVal[1] →

SplitRowHeightVal[1]
   index = 4        index = 5        index = 6        index = 7

SplitRowBdVal[2] →

SplitRowHeightVal[2]
   index = 8        index = 9        index = 10       index = 11

SplitRowBdVal[3] →

SplitRowHeightVal[3]
   index = 12      index = 13      index = 14      index = 15

EP 4 604 525 A1

[FIG. 18]

[FIG. 19]

[FIG. 20]

| Sequence header | Sequence unit payload |
|---|---|

| Region header | Region Data | Region header | Region Data | • • • | Region header | Region Data |
|---|---|---|---|---|---|---|

(a)

| Sequence header | Sequence unit payload |
|---|---|

| Region Data | Region Data | • • • | Region Data |
|---|---|---|---|

(b)

EP 4 604 525 A1

[FIG. 21]

```
                    ┌──────────────┐
                    │    START     │
                    └──────┬───────┘
                           │                    S2110
                    ┌──────▼───────────────────────┐
                    │ DERIVE SIZE OF PROCESSING UNIT│
                    └──────┬───────────────────────┘
                           │                    S2120
                    ┌──────▼───────────────────────┐
                    │   DERIVE IMAGE SPLIT METHOD   │
                    └──────┬───────────────────────┘
                           │                    S2130
                    ┌──────▼───────────────────────┐
                    │ DERIVE IMAGE SPLIT INFORMATION│
                    └──────┬───────────────────────┘
                           │                    S2140
                    ┌──────▼───────────────────────┐
                    │      RECONSTRUCT IMAGE        │
                    └──────┬───────────────────────┘
                           │
                    ┌──────▼───────┐
                    │     END      │
                    └──────────────┘
```

[FIG. 22]

START

S2210
DETERMINE SIZE OF PROCESSING UNIT

S2220
DETERMINE SPLIT METHOD

S2230
GENERATE SPLIT INFORMATION

END

[FIG. 23]

[FIG. 24]

User Equipment

External device

Smart Phone

Surveillance camera

Autonomous vehicle

Robot

Interconnected System

Streaming server
Analytics Server

Storage Server

Wired/wireless communication

# INTERNATIONAL SEARCH REPORT

| International application No. |
|---|
| **PCT/KR2023/015578** |

| A. | CLASSIFICATION OF SUBJECT MATTER |
|---|---|

**H04N 19/119**(2014.01)i; **H04N 19/70**(2014.01)i; **H04N 19/13**(2014.01)i; **H04N 19/176**(2014.01)i

According to International Patent Classification (IPC) or to both national classification and IPC

| B. | FIELDS SEARCHED |
|---|---|

Minimum documentation searched (classification system followed by classification symbols)

H04N 19/119(2014.01); G06F 3/06(2006.01); G06T 3/40(2006.01); H04N 19/00(2014.01); H04N 19/184(2014.01); H04N 19/42(2014.01); H04N 19/44(2014.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 복호화(decoding), 자원(resource), 피크(peak), 메모리(memory), 분할 (partition), 위치(position)

| C. | DOCUMENTS CONSIDERED TO BE RELEVANT |
|---|---|

| Category* | Citation of document, with indication, where appropriate, of the relevant passages | Relevant to claim No. |
|---|---|---|
| Y | KR 10-2017-0086977 A (SAMSUNG ELECTRONICS CO., LTD. et al.) 27 July 2017 (2017-07-27) See paragraphs [0002], [0008], [0081], [0088], [0099]-[0100], [0108] and [0132]-[0136]; claims 1, 5, 8 and 10-11; and figures 4-5 and 8. | 1-14 |
| Y | WO 2022-128105 A1 (HUAWEI TECHNOLOGIES CO., LTD.) 23 June 2022 (2022-06-23) See page 43, line 31 - page 44, line 4; page 50, lines 20-21; page 52, lines 17-22 and page 53, lines 17-18; and figure 18. | 1-14 |
| Y | KR 10-2284110 B1 (SAMSUNG ELECTRONICS CO., LTD.) 30 July 2021 (2021-07-30) See paragraphs [0218] and [0228]. | 9 |
| A | US 2017-0220283 A1 (MICROSOFT TECHNOLOGY LICENSING, LLC) 03 August 2017 (2017-08-03) See claims 1-8. | 1-14 |
| A | US 2020-0304815 A1 (TENCENT AMERICA LLC) 24 September 2020 (2020-09-24) See claims 1-10. | 1-14 |

☐ Further documents are listed in the continuation of Box C.      ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **22 January 2024** | **22 January 2024** |

| Name and mailing address of the ISA/KR | Authorized officer |
|---|---|
| **Korean Intellectual Property Office** **Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT
### Information on patent family members

| Patent document cited in search report | | | Publication date (day/month/year) | Patent family member(s) | | | Publication date (day/month/year) |
|---|---|---|---|---|---|---|---|
| KR | 10-2017-0086977 | A | 27 July 2017 | US | 2017-0208334 | A1 | 20 July 2017 |
| WO | 2022-128105 | A1 | 23 June 2022 | CN | 116648912 | A | 25 August 2023 |
| | | | | EP | 4205390 | A1 | 05 July 2023 |
| | | | | JP | 2023-547941 | A | 14 November 2023 |
| | | | | US | 2023-0336784 | A1 | 19 October 2023 |
| KR | 10-2284110 | B1 | 30 July 2021 | CN | 105144713 | A | 09 December 2015 |
| | | | | CN | 105144713 | B | 05 April 2019 |
| | | | | EP | 2947879 | A1 | 25 November 2015 |
| | | | | EP | 2947879 | B1 | 07 November 2018 |
| | | | | JP | 2016-507988 | A | 10 March 2016 |
| | | | | JP | 6113865 | B2 | 12 April 2017 |
| | | | | KR | 10-2014-0093641 | A | 28 July 2014 |
| | | | | US | 2015-0358633 | A1 | 10 December 2015 |
| | | | | WO | 2014-112830 | A1 | 24 July 2014 |
| US | 2017-0220283 | A1 | 03 August 2017 | | None | | |
| US | 2020-0304815 | A1 | 24 September 2020 | CN | 113597763 | A | 02 November 2021 |
| | | | | EP | 3942804 | A1 | 26 January 2022 |
| | | | | JP | 2022-514694 | A | 14 February 2022 |
| | | | | JP | 7119232 | B2 | 16 August 2022 |
| | | | | KR | 10-2021-0064362 | A | 02 June 2021 |
| | | | | US | 11677969 | B2 | 13 June 2023 |
| | | | | US | 2023-0247214 | A1 | 03 August 2023 |
| | | | | WO | 2020-197957 | A1 | 01 October 2020 |

Form PCT/ISA/210 (patent family annex) (July 2022)